# EUROPEAN PATENT SPECIFICATION

(11) **EP 4 034 998 B1**
(45) Date of publication and mention of the grant of the patent: **03.04.2024**
(21) Application number: 20789352.0
(22) Date of filing: 24.09.2020
(51) Int. Cl.: G06F 9/448, G06F 16/11, G06F 16/16, G06F 21/62

(54) **USER-SPECIFIC DATA MANIPULATION SYSTEM FOR OBJECT STORAGE SERVICE BASED ON USER-SUBMITTED CODE**
BENUTZERSPEZIFISCHES DATENMANIPULATIONSSYSTEM FÜR OBJEKTSPEICHERDIENST AUF DER BASIS EINES BENUTZERSEITIG GESENDETEN CODES
SYSTÈME DE MANIPULATION DE DONNÉES SPÉCIFIQUES À UN UTILISATEUR DESTINÉ À UN SERVICE DE STOCKAGE D'OBJETS BASÉ SUR UN CODE SOUMIS PAR L'UTILISATEUR

(30) Priority: 27.09.2019 US 201916586647; 27.09.2019 US 201916586659; 27.09.2019 US 201916586686
(43) Date of publication of application: 03.08.2022
(73) Proprietor: Amazon Technologies Inc., Seattle, WA 98108-1226 (US)
(72) Inventor: MILLER, Kevin C., Seattle, Washington 98109-5210 (US); DATTA, Ramyanshu, Seattle, Washington 98109-5210 (US); HARRIS, Timothy Lawrence, Seattle, Washington 98109-5210 (US)
(74) Representative: Bosch Jehle Patentanwaltsgesellschaft mbH
(86) International application number: PCT/US2020/052419
(87) International publication number: WO 2021/061932

(56) References cited:
- US-A1- 2005 114 672
- US-A1- 2014 215 574
- US-A1- 2014 222 866

## Description

### BACKGROUND

Computing devices can utilize communication networks to exchange data. Companies and organizations operate computer networks that interconnect a number of computing devices to support operations or to provide services to third parties. The computing systems can be located in a single geographic location or located in multiple, distinct geographic locations (e.g., interconnected via private or public communication networks). Specifically, data centers or data processing centers, herein generally referred to as a "data center," may include a number of interconnected computing systems to provide computing resources to users of the data center. The data centers may be private data centers operated on behalf of an organization or public data centers operated on behalf, or for the benefit of, the general public. US 2014/0222866 A1 relates to hosted storage. US 2014/0215574 A1 discloses a method for accessing objects in hosted storage. US 2005/0114672 A1 relates to data rights management of digital information which controls the distribution and unauthorized access and use of the digital information.

To facilitate increased utilization of data center resources, virtualization technologies allow a single physical computing device to host one or more instances of virtual machines that appear and operate as independent computing devices to users of a data center. With virtualization, the single physical computing device can create, maintain, delete, or otherwise manage virtual machines in a dynamic manner. In turn, users can request computer resources from a data center, including single computing devices or a configuration of networked computing devices, and be provided with varying numbers of virtual machine resources.

In addition to computational resources, data centers provide a number of beneficial other services to client devices. For example, data centers may provide data storage services configured to store data submitted by client devices, and enabling retrieval of that data over a network. A variety of types of data storage services can be provided, often varying according to their input/output (I/O) mechanisms. For example, database services may allow I/O based on a database query language, such as the Structured Query Language (SQL). Block storage services may allow I/O based on modification to one or more defined-length blocks, in a manner similar to how an operating system interacts with local storage, and may thus facilitate virtualized disk drives usable, for example, to store an operating system of a virtual machine. Object storage services may allow I/O at the level of individual objects or resources, such as individual files, which may vary in content and length. For example, an object storage service may provide an interface compliant with the Representational State Transfer (REST) architectural style, such as by allowing I/O based on calls designating input data and a hypertext transport protocol request methods (e.g., GET, PUT, POST, DELETE, etc.) to be applied to that data. By transmitting a call designating input data and a request method, a client can thus retrieve the data from an object storage service, write the data to the object storage service as a new object, modify an existing object, etc.

### BRIEF DESCRIPTION OF THE DRAWINGS

FIG. 1 is a block diagram depicting an illustrative environment in which an object storage service can operate in conjunction with an on-demand code execution system to implement functions in connection with input/output (I/O) requests to the object storage service;
FIG. 2 depicts a general architecture of a computing device providing a frontend of the object storage service of FIG. 1;
FIG. 3 is a flow diagram depicting illustrative interactions for enabling a client device to modify an I/O path for the object storage service by insertion of a function implemented by execution of a task on the on-demand code execution system;
FIG. 4 is an illustrative visualization of a pipeline of functions to be applied to an I/O path for the object storage service of FIG. 1;
FIGS. 5A-5B show a flow diagram depicting illustrative interactions for handling a request to store input data as an object on the object storage service of FIG. 1, including execution of an owner-specified task to the input data and storage of output of the task as the object;
FIGS. 6A-6B show a flow diagram depicting illustrative interactions for handling a request to retrieve data of an object on the object storage service of FIG. 1, including execution of an owner-specified task to the object and transmission of an output of the task to a requesting device as the object;
FIG. 7 is a flow chart depicting an illustrative routine for implementing owner-defined functions in connection with an I/O request obtained at the object storage service of FIG. 1 over an I/O path;
FIG. 8 is a flow chart depicting an illustrative routine for executing a task on the on-demand code execution system of FIG. 1 to enable data manipulations during implementation of an owner-defined function;
FIG. 9 shows a flow diagram depicting illustrative interactions for enabling a client device to modify an I/O path for the object storage service of FIG. 1 to include execution of user-submitted data access control code;
FIGS. 10A-10B show a flow diagram depicting illustrative interactions for handling a request to retrieve data of an object on the object storage service of FIG. 1, including execution of an owner-specified data access control code to provide client-specific data access;
FIG. 11 is a flow chart depicting an illustrative routine for handling a request to retrieve data of an object on the object storage service of FIG. 1 using the data access control code provided by the client;
FIG. 12 is a flow chart depicting an illustrative routine for implementing access-level-based data manipulation in connection with an I/O request obtained at the object storage service of FIG. 1;
FIG. 13 shows a flow diagram depicting illustrative interactions for allowing user-specification of code execution environment rules and executing owner-submitted code according to the code execution environment rules; and
FIG. 14 is a flow chart depicting an illustrative routine for implementing user code execution customization in connection with an I/O request obtained at the object storage service of FIG. 1.

### DETAILED DESCRIPTION

The invention is defined by the independent claims. Dependent claims disclose preferred embodiments of the invention.

Generally described, aspects of the present disclosure relate to handling requests to read or write to data objects on an object storage system. More specifically, aspects of the present disclosure relate to modification of an input/output (I/O) path for an object storage service, such that one or more data manipulations can be inserted into the I/O path to modify the data to which a called request method is applied, without requiring a calling client device to specify such data manipulations. In one embodiment, data manipulations occur through execution of user-submitted code, which may be provided for example by an owner of a collection of data objects on an object storage system in order to control interactions with that data object. For example, in cases where an owner of an object collection wishes to ensure that end users do not submit objects to the collection including any personally identifying information (to ensure end user's privacy), the owner may submit code executable to strip such information from a data input. The owner may further specify that such code should be executed during each write of a data object to the collection. Accordingly, when an end user attempts to write input data to the collection as a data object (e.g., via an HTTP PUT method), the code may be first executed against the input data, and resulting output data may be written to the collection as the data object. Notably, this may result in the operation requested by the end user-such as a write operation-being applied not to the end user's input data, but instead to the data output by the data manipulation (e.g., owner-submitted) code. In this way, owners of data collections control I/O to those collections without relying on end users to comply with owner requirements. Indeed, end users (or any other client device) may be unaware that modifications to I/O are occurring. As such, embodiments of the present disclosure enable modification of I/O to an object storage service without modification of an interface to the service, ensuring inter-compatibility with other pre-existing software utilizing the service.

In some embodiments of the present disclosure, data manipulations may occur on an on-demand code execution system, sometimes referred to as a serverless execution system. Generally described, on-demand code execution systems enable execution of arbitrary user-designated code, without requiring the user to create, maintain, or configure an execution environment (e.g., a physical or virtual machine) in which the code is executed. For example, whereas conventional computing services often require a user to provision a specific device (virtual or physical), install an operating system on the device, configure application, define network interfaces, and the like, an on-demand code execution system may enable a user to submit code and may provide to the user an application programming interface (API) that, when used, enables the user to request execution of the code. On receiving a call through the API, the on-demand code execution system may generate an execution environment for the code, provision the environment with the code, execute the code, and provide a result. Thus, an on-demand code execution system can remove a need for a user to handle configuration and management of environments for code execution. Example techniques for implementing an on-demand code execution system are disclosed, for example, within U.S. Patent No. 9,323,556, entitled "PROGRAMMATIC EVENT DETECTION AND MESSAGE GENERATION FOR REQUESTS TO EXECUTE PROGRAM CODE," and filed September 30, 2014 (the "'556 Patent"), the entirety of which is hereby incorporated by reference.

Due to the flexibility of on-demand code execution system to execute arbitrary code, such a system can be used to create a variety of network services. For example, such a system could be used to create a "micro-service," a network service that implements a small number of functions (or only one function), and that interacts with other services to provide an application. In the context of on-demand code execution systems, the code executed to create such a service is often referred to as a "function" or a "task," which can be executed to implement the service. Accordingly, one technique for performing data manipulations within the I/O path of an object storage service may be to create a task on an on-demand code execution system that, when executed, performs the required data manipulation. Illustratively, the task could provide an interface similar or identical to that of the object storage service, and be operable to obtain input data in response to a request method call (e.g., HTTP PUT or GET calls), execute the code of the task against the input data, and perform a call to the object storage service for implementation of the request method on resulting output data. A downside of this technique is a complexity. For example, end users might be required under this scenario to submit I/O requests to the on-demand code execution system, rather than the object storage service, to ensure execution of the task. Should an end user submit a call directly to the object storage service, task execution may not occur, and thus an owner would not be enabled to enforce a desired data manipulation for an object collection. In addition, this technique may require that code of a task be authored to both provide an interface to end users that enables handling of calls to implement request methods on input data, and an interface that enables performance of calls from the task execution to the object storage service. Implementation of these network interfaces may significantly increase the complexity of the required code, thus disincentivizing owners of data collections from using this technique. Moreover, where user-submitted code directly implements network communication, that code may need to be varied according to the request method handled. For example, a first set of code may be required to support GET operations, a second set of code may be required to support PUT operations, etc. Because embodiments of the present disclosure relieve the user-submitted code of the requirement of handling network communications, one set of code may in some cases be enabled to handle multiple request methods.

To address the above-noted problems, embodiments of the present disclosure can enable strong integration of serverless task executions with interfaces of an object storage service, such that the service itself is configured to invoke a task execution on receiving an I/O request to a data collection. Moreover, generation of code to perform data manipulations may be simplified by configuring the object storage service to facilitate data input and output from a task execution, without requiring the task execution to itself implement network communications for I/O operations. Specifically, an object storage service and on-demand code execution system can be configured in one embodiment to "stage" input data to a task execution in the form of a handle (e.g., a POSIX-compliant descriptor) to an operating-system-level input/output stream, such that code of a task can manipulate the input data via defined-stream operations (e.g., as if the data existed within a local file system). This stream-level access to input data can be contrasted, for example, with network-level access of input data, which generally requires that code implement network communication to retrieve the input data. Similarly, the object storage service and on-demand code execution system can be configured to provide an output stream handle representing an output stream to which a task execution may write output. On detecting writes to the output stream, the object storage service and on-demand code execution system may handle such writes as output data of the task execution, and apply a called request method to the output data. By enabling a task to manipulate data based on input and output streams passed to teh task, as opposed to requiring the code to handle data communications over a network, the code of the task can be greatly simplified.

Another benefit of enabling a task to manipulate data based on input and output handles is increased security. A general-use on-demand code execution system may operate permissively with respect to network communications from a task execution, enabling any network communication from the execution unless such communication is explicitly denied. This permissive model is reflective of the use of task executions as micro-services, which often require interaction with a variety of other network services. However, this permissive model also decreases security of the function, since potentially malicious network communications can also reach the execution. In contrast to a permissive model, task executions used to perform data manipulations on an object storage system's I/O path can utilize a restrictive model, whereby only explicitly-allowed network communications can occur from an environment executing a task. Illustratively, because data manipulation can occur via input and output handles, it is envisioned that many or most tasks used to perform data manipulation in embodiments of the present disclosure would require no network communications to occur at all, greatly increasing security of such an execution. Where a task execution does require some network communications, such as to contact an external service to assist with a data manipulation, such communications can be explicitly allowed, or "whitelisted," thus exposing the execution in only a strictly limited manner.

In some embodiments, a data collection owner may require only a single data manipulation to occur with respect to I/O to the collection. Accordingly, the object storage service may detect I/O to the collection, implement the data manipulation (e.g., by executing a serverless task within an environment provisioned with input and output handles), and apply the called request method to the resulting output data. In other embodiments, an owner may request multiple data manipulations occur with respect to an I/O path. For example, to increase portability and reusability, an owner may author multiple serverless tasks, which may be combined in different manners on different I/O paths. Thus, for each path, the owner may define a series of serverless tasks to be executed on I/O to the path. Moreover, in some configurations, an object storage system may natively provide one or more data manipulations. For example, an object storage system may natively accept requests for only portions of an object (e.g., of a defined byte range), or may natively enable execution of queries against data of an object (e.g., SQL queries). In some embodiments, any combination of various native manipulations and serverless task-based manipulations may be specified for a given I/O path. For example, an owner may specify that, for a particular request to read an object, a given SQL query be executed against the object, the output of which is processed via a first task execution, the output of which is processed via a second task execution, etc. The collection of data manipulations (e.g., native manipulations, serverless task-based manipulations, or a combination thereof) applied to an I/O path is generally referred to herein as a data processing "pipeline" applied to the I/O path.

In accordance with aspects of the present disclosure, a particular path modification (e.g., the addition of a pipeline) applied to an I/O path may vary according to attributes of the path, such as a client device from which an I/O request originates or an object or collection of objects within the request. For example, pipelines may be applied to individual objects, such that the pipeline is applied to all I/O requests for the object, or a pipeline may be selectively applied only when certain client devices access the object. In some instances, an object storage service may provide multiple I/O paths for an object or collection. For example, the same object or collection may be associated with multiple resource identifiers on the object storage service, such that the object or collection can be accessed through the multiple identifiers (e.g., uniform resource identifiers, or URIs), which illustratively correspond to different network-accessible endpoints. In one embodiment, different pipelines may be applied to each I/O path for a given object. For example, a first I/O path may be associated with unprivileged access to a data set, and thus be subject to data manipulations that remove confidential information from the data set prior during retrieval. A second I/O path may be associated with privileged access, and thus not be subject to those data manipulations. In some instances, pipelines may be selectively applied based on other criteria. For example, whether a pipeline is applied may be based on time of day, a number or rate of accesses to an object or collection, etc.

Another limitation of existing object storage services is the inability to dynamically control access to the data provided by the object storage services. While such object storage services may provide a way for the data owner/provider to configure user-specific permissions and credentials (e.g., within the object storage services or with an external token broker that facilitates data access control) such that different users have access to different portions (e.g., directors, sub-directories, paths, buckets, volumes, containers, etc.) of the data, such configurations are typically done manually, and having to change the configurations every time user access rights need to be modified would be very burdensome to the owner/provider of the data. Also, since static permissions and credentials often only rely on the identity of the user accessing the data, it may not be possible or feasible to implement other methods of determining access such as providing access based on a time window, prior access, keywords, and the like.

In accordance with aspects of the present disclosure, data access control code may be written by the data owner/provider and placed in the I/O path such that when a request to access the data is received (e.g., via a GET call), the data access control code can be executed and provide a more robust user-specific access to the data. For example, the data access control code may provide access based on a time window (e.g., for a user who has signed up for a 7-day access to the data maintained by the object storage service, access may be denied after 7 days), provide access based on prior access by the same user (e.g., for a user whose access is set to expire after accessing the data 5 times, access may be denied after the user accesses the data 5 times), provide access based on keywords (e.g., for a user who is allowed to access the portion of the data that relates to "automobiles," access requests that do not specify the keyword "automobiles" may be denied), and the like. Thus, the techniques of the present disclosure allow the data owner/provider to be able to provide dynamically controlled access to the data maintained by the object storage service.

Similarly, existing object storage services may not provide the ability for the data owner/provider to specify different types of data manipulations to be performed for different access requests. For example, existing object storage services may allow the data owner/provider to specify that User A is allowed to access Data Buckets X and Y and User B is allowed to access Data Bucket X but not Data Bucket Y. However, such binary permission settings (e.g., a user either has access to a data object or does not have access to the data object) may not allow the data owner/provider to specify more complex permission information such as that User A is (i) given full access to Data Bucket X in its entirety without modification and (ii) given preview access to Data Bucket Y such that User A can only access the first page of each document in Data Bucket Y, and that User B is (i) not allowed to access any data in Data Bucket X and (ii) is given archival access to Data Bucket Y such that User B can only access data in Bucket Y that are more than 1 year old.

In accordance with aspects of the present disclosure, data access control code may be combined (e.g., executed in series or combined into the same code) with one or more data manipulation codes to provide the data owner/provider with the ability to perform user-access-level-specific data manipulations (e.g., data removal, modification, redaction, processing, etc.). For example, when an I/O request is received (e.g., via a GET call or a PUT call), the data access control code in the I/O path may be executed, and either provide full access to the requested data, cause additional user code to be executed (e.g., data manipulation code), or deny the request based on the user's access level. Advantageously, the techniques of the present disclosure not only allow the data owner/provider to specify user-specific permissions but also allow the data owner/provider to cause user-specific modification, filtering, or processing to be performed prior to returning the requested data to the requesting user. Thus, these techniques allow the data owner/provider to be able to specify user-specific and access-level-specific manipulations of the data maintained by the object storage service.

Additionally, existing object storage services, due to the lack of integration with an external serverless code execution system as discussed above, may not provide a mechanism for the data owner/provider to control the execution environment of the various code (e.g., owner-submitted) executions performed in connection with the provision of the services provided by the object storage service. Without the ability to customize the execution environment for these code executions, such existing object storage services may be limited to having the same execution environment for all users and for all user codes.

In accordance with aspects of the present disclosure, the object storage service can allow a data owner/provider to customize the code execution environment by specifying code execution environment rules. Such code execution environment rules may indicate the identity of one or more owner-submitted codes that have been placed in the I/O request path and the corresponding privileges given to (or restrictions placed on) the execution of the one or more owner-submitted codes. For example, the code execution environment rules can specify that a data access control code should have access to an external database that contains sensitive user authorization information, whereas a data manipulation code configured to be executed after the data access control code grants access should not have access to such an external database that contains sensitive user authorization information. Similarly, such code execution environment rules may indicate the identity of one or more data owners/providers (e.g., a user who has stored certain data object on the service 160 and made the data object accessible by other users) or requesting users (e.g., users who requests to read or write to the data objects stored by the service 160) and the corresponding privileges given to (or restrictions placed on) the execution of one or more codes associated with the data owners/providers or requesting users. For example, for Users A and B, the code execution environment rules may specify that code executions performed on behalf of User A should have access to User A's private resources (e.g., database services, logging services, storage services, or other network-accessible services that may be accessed using User A's credentials), whereas code executions performed on behalf of User B should not have access to external resources or establish network connections with an external service (e.g., not allowed to access User B's private resources or other external resources). In some cases, Users A and B are data owners/providers in this example. In other cases, Users A and B are requesting users who wish to read the data owner's data or write to the data owner's storage on the service 160.

As will be appreciated by one of skill in the art in light of the present disclosure, the embodiments disclosed herein improve the ability of computing systems, such as object storage systems, to provide and enforce data manipulation functions against data objects. Whereas prior techniques generally depend on external enforcement of data manipulation functions (e.g., requesting that users strip personal information before uploading it), embodiments of the present disclosure enable direct insertion of data manipulation into an I/O path for the object storage system. Moreover, embodiments of the present disclosure provide a secure mechanism for implementing data manipulations, by providing for serverless execution of manipulation functions within an isolated execution environment. Embodiments of the present disclosure further improve operation of serverless functions, by enabling such functions to operate on the basis of local stream (e.g., "file") handles, rather than requiring that functions act as network-accessible services. The presently disclosed embodiments therefore address technical problems inherent within computing systems, such as the difficulty of enforcing data manipulations at storage systems and the complexity of creating external services to enforce such data manipulations. These technical problems are addressed by the various technical solutions described herein, including the insertion of data processing pipelines into an I/O path for an object or object collection, potentially without knowledge of a requesting user, the use of serverless functions to perform aspects of such pipelines, and the use of local stream handles to enable simplified creation of serverless functions. Thus, the present disclosure represents an improvement on existing data processing systems and computing systems in general.

The general execution of tasks on the on-demand code execution system will now be discussed. As described in detail herein, the on-demand code execution system may provide a network-accessible service enabling users to submit or designate computer-executable source code to be executed by virtual machine instances on the on-demand code execution system. Each set of code on the on-demand code execution system may define a "task," and implement specific functionality corresponding to that task when executed on a virtual machine instance of the on-demand code execution system. Individual implementations of the task on the on-demand code execution system may be referred to as an "execution" of the task (or a "task execution"). In some cases, the on-demand code execution system may enable users to directly trigger execution of a task based on a variety of potential events, such as transmission of an application programming interface ("API") call to the on-demand code execution system, or transmission of a specially formatted hypertext transport protocol ("HTTP") packet to the on-demand code execution system. In accordance with embodiments of the present disclosure, the on-demand code execution system may further interact with an object storage system, in order to execute tasks during application of a data manipulation pipeline to an I/O path. The on-demand code execution system can therefore execute any specified executable code "on-demand," without requiring configuration or maintenance of the underlying hardware or infrastructure on which the code is executed. Further, the on-demand code execution system may be configured to execute tasks in a rapid manner (e.g., in under 100 milliseconds [ms]), thus enabling execution of tasks in "real-time" (e.g., with little or no perceptible delay to an end user). To enable this rapid execution, the on-demand code execution system can include one or more virtual machine instances that are "pre-warmed" or pre-initialized (e.g., booted into an operating system and executing a complete or substantially complete runtime environment) and configured to enable execution of user-defined code, such that the code may be rapidly executed in response to a request to execute the code, without delay caused by initializing the virtual machine instance. Thus, when an execution of a task is triggered, the code corresponding to that task can be executed within a pre-initialized virtual machine in a very short amount of time.

Specifically, to execute tasks, the on-demand code execution system described herein may maintain a pool of executing virtual machine instances that are ready for use as soon as a request to execute a task is received. Due to the pre-initialized nature of these virtual machines, delay (sometimes referred to as latency) associated with executing the task code (e.g., instance and language runtime startup time) can be significantly reduced, often to sub-100 millisecond levels. Illustratively, the on-demand code execution system may maintain a pool of virtual machine instances on one or more physical computing devices, where each virtual machine instance has one or more software components (e.g., operating systems, language runtimes, libraries, etc.) loaded thereon. When the on-demand code execution system receives a request to execute program code (a "task"), the on-demand code execution system may select a virtual machine instance for executing the program code of the user based on the one or more computing constraints related to the task (e.g., a required operating system or runtime) and cause the task to be executed on the selected virtual machine instance. The tasks can be executed in isolated containers that are created on the virtual machine instances, or may be executed within a virtual machine instance isolated from other virtual machine instances acting as environments for other tasks. Since the virtual machine instances in the pool have already been booted and loaded with particular operating systems and language runtimes by the time the requests are received, the delay associated with finding compute capacity that can handle the requests (e.g., by executing the user code in one or more containers created on the virtual machine instances) can be significantly reduced.

As used herein, the term "virtual machine instance" is intended to refer to an execution of software or other executable code that emulates hardware to provide an environment or platform on which software may execute (an example "execution environment"). Virtual machine instances are generally executed by hardware devices, which may differ from the physical hardware emulated by the virtual machine instance. For example, a virtual machine may emulate a first type of processor and memory while being executed on a second type of processor and memory. Thus, virtual machines can be utilized to execute software intended for a first execution environment (e.g., a first operating system) on a physical device that is executing a second execution environment (e.g., a second operating system). In some instances, hardware emulated by a virtual machine instance may be the same or similar to hardware of an underlying device. For example, a device with a first type of processor may implement a plurality of virtual machine instances, each emulating an instance of that first type of processor. Thus, virtual machine instances can be used to divide a device into a number of logical sub-devices (each referred to as a "virtual machine instance"). While virtual machine instances can generally provide a level of abstraction away from the hardware of an underlying physical device, this abstraction is not required. For example, assume a device implements a plurality of virtual machine instances, each of which emulate hardware identical to that provided by the device. Under such a scenario, each virtual machine instance may allow a software application to execute code on the underlying hardware without translation, while maintaining a logical separation between software applications running on other virtual machine instances. This process, which is generally referred to as "native execution," may be utilized to increase the speed or performance of virtual machine instances. Other techniques that allow direct utilization of underlying hardware, such as hardware pass-through techniques, may be used, as well.

While a virtual machine executing an operating system is described herein as one example of an execution environment, other execution environments are also possible. For example, tasks or other processes may be executed within a software "container," which provides a runtime environment without itself providing virtualization of hardware. Containers may be implemented within virtual machines to provide additional security, or may be run outside of a virtual machine instance.

The foregoing aspects and many of the attendant advantages of this disclosure will become more readily appreciated as the same become better understood by reference to the following description, when taken in conjunction with the accompanying drawings.

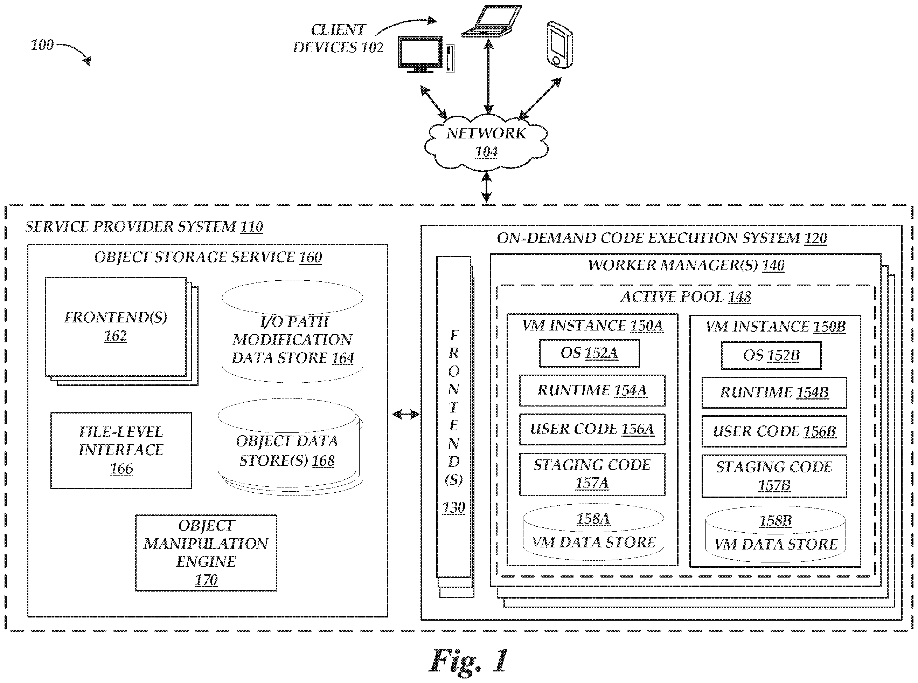

FIG. 1 is a block diagram of an illustrative operating environment 100 in which a service provider system 110 operates to enable client devices 102 to perform I/O operations on objects stored within an object storage service 160 and to apply path modifications to such I/O operations, which modifications may include execution of user-defined code on an on-demand code execution system 120.

By way of illustration, vatrious example client devices 102 are shown in communication with the service provider system 110, including a desktop computer, laptop, and a mobile phone. In general, the client devices 102 can be any computing device such as a desktop, laptop or tablet computer, personal computer, wearable computer, server, personal digital assistant (PDA), hybrid PDA/mobile phone, mobile phone, electronic book reader, set-top box, voice command device, camera, digital media player, and the like.

Generally described, the object storage service 160 can operate to enable clients to read, write, modify, and delete data objects, each of which represents a set of data associated with an identifier (an "object identifier" or "resource identifier") that can be interacted with as an individual resource. For example, an object may represent a single file submitted by a client device 102 (though the object storage service 160 may or may not store such an object as a single file). This object-level interaction can be contrasted with other types of storage services, such as block-based storage services providing data manipulation at the level of individual blocks or database storage services providing data manipulation at the level of tables (or parts thereof) or the like.

The object storage service 160 illustratively includes one or more frontends 162, which provide an interface (a command-line interface (CLIs), application programing interface (APIs), or other programmatic interface) through which client devices 102 can interface with the service 160 to configure the service 160 on their behalf and to perform I/O operations on the service 160. For example, a client device 102 may interact with a frontend 162 to create a collection of data objects on the service 160 (e.g., a "bucket" of objects) and to configure permissions for that collection. Client devices 102 may thereafter create, read, update, or delete objects within the collection based on the interfaces of the frontends 162. In one embodiment, the frontend 162 provides a REST-compliant HTTP interface supporting a variety of request methods, each of which corresponds to a requested I/O operation on the service 160. By way of non-limiting example, request methods may include:
- a GET operation requesting retrieval of an object stored on the service 160 by reference to an identifier of the object;
- a PUT operation requesting storage of an object to be stored on the service 160, including an identifier of the object and input data to be stored as the object;
- a DELETE operation requesting deletion of an object stored on the service 160 by reference to an identifier of the object; and
- a LIST operation requesting listing of objects within an object collection stored on the service 160 by reference to an identifier of the collection.
A variety of other operations may also be supported. For example, the service 160 may provide a POST operation similar to a PUT operation but associated with a different upload mechanism (e.g., a browser-based HTML upload), or a HEAD operation enabling retrieval of metadata for an object without retrieving the object itself. In some embodiments, the service 160 may enable operations that combine one or more of the above operations, or combining an operation with a native data manipulation. For example, the service 160 may provide a COPY operation enabling copying of an object stored on the service 160 to another object, which operation combines a GET operation with a PUT operation. As another example, the service 160 may provide a SELECT operation enabling specification of an SQL query to be applied to an object prior to returning the contents of that object, which combines an application of an SQL query to a data object (a native data manipulation) with a GET operation. As yet another example, the service 160 may provide a "byte range" GET, which enables a GET operation on only a portion of a data object. In some instances, the operation requested by a client device 102 on the service 160 may be transmitted to the service via an HTTP request, which itself may include an HTTP method. In some cases, such as in the case of a GET operation, the HTTP method specified within the request may match the operation requested at the service 160. However, in other cases, the HTTP method of a request may not match the operation requested at the service 160. For example, a request may utilize an HTTP POST method to transmit a request to implement a SELECT operation at the service 160.

During general operation, frontends 162 may be configured to obtain a call to a request method, and apply that request method to input data for the method. For example, a frontend 162 can respond to a request to PUT input data into the service 160 as an object by storing that input data as the object on the service 160. Objects may be stored, for example, on object data stores 168, which correspond to any persistent or substantially persistent storage (including hard disk drives (HDDs), solid state drives (SSDs), network accessible storage (NAS), storage area networks (SANs), non-volatile random access memory (NVRAM), or any of a variety of storage devices known in the art). As a further example, the frontend 162 can respond to a request to GET an object from the service 160 by retrieving the object from the stores 168 (the object representing input data to the GET resource request), and returning the object to a requesting client device 102.

In some cases, calls to a request method may invoke one or more native data manipulations provided by the service 160. For example, a SELECT operation may provide an SQL-formatted query to be applied to an object (also identified within the request), or a GET operation may provide a specific range of bytes of an object to be returned. The service 160 illustratively includes an object manipulation engine 170 configured to perform native data manipulations, which illustratively corresponds to a device configured with software executable to implement native data manipulations on the service 160 (e.g., by stripping non-selected bytes from an object for a byte-range GET, by applying an SQL query to an object and returning results of the query, etc.).

In accordance with embodiments of the present disclosure, the service 160 can further be configured to enable modification of an I/O path for a given object or collection of objects, such that a called request method is applied to an output of a data manipulation function, rather than the resource identified within the call. For example, the service 160 may enable a client device 102 to specify that GET operations for a given object should be subject to execution of a user-defined task on the on-demand code execution system 120, such that the data returned in response to the operation is the output of a task execution rather than the requested object. Similarly, the service 160 may enable a client device 102 to specify that PUT operations to store a given object should be subject to execution of a user-defined task on the on-demand code execution system 120, such that the data stored in response to the operation is the output of a task execution rather than the data provided for storage by a client device 1 02. As will be discussed in more detail below, path modifications may include specification of a pipeline of data manipulations, including native data manipulations, task-based manipulations, or combinations thereof. Illustratively, a client device 102 may specify a pipeline or other data manipulation for an object or object collection through the frontend 162, which may store a record of the pipeline or manipulation in the I/O path modification data store 164, which store 164, like the object data stores 168, can represent any persistent or substantially persistent storage. While shown as distinct in FIG. 1, in some instances the data stores 164 and 168 may represent a single collection of data stores. For example, data modifications to objects or collections may themselves be stored as objects on the service 160.

To enable data manipulation via execution of user-defined code, the system further includes an on-demand code execution system 120. In one embodiment, the system 120 is solely usable by the object storage service 160 in connection with data manipulations of an I/O path. In another embodiment, the system 120 is additionally accessible by client devices 102 to directly implement serverless task executions. For example, the on-demand code execution system 120 may provide the service 160 (and potentially client devices 102) with one or more user interfaces, command-line interfaces (CLIs), application programing interfaces (APIs), or other programmatic interfaces for generating and uploading user-executable code (e.g., including metadata identifying dependency code objects for the uploaded code), invoking the user-provided code (e.g., submitting a request to execute the user codes on the on-demand code execution system 120), scheduling event-based jobs or timed jobs, tracking the user-provided code, or viewing other logging or monitoring information related to their requests or user codes. Although one or more embodiments may be described herein as using a user interface, it should be appreciated that such embodiments may, additionally or alternatively, use any CLIs, APIs, or other programmatic interfaces.

In addition, as shown in FIG. 1, the service 160 may include a data access control engine 172 configured to perform native data access control (e.g., using a default data access control code), which illustratively corresponds to a device configured with software executable to implement data access control on the service 160 (e.g., by setting permissions for individual users and specifying the portions of the data accessible by the individual users). Additionally, the data access control engine 172 may facilitate data access control performed based on executing one or more additional data access control codes (e.g., submitted by the data owner/provider). Although illustrated as a separate component, the data access control engine 172 may in some cases be integrated into the frontend(s) 162 or another component of the service 160.

The service 160 may further include a code execution control engine 174 configured to perform code execution control, which illustratively corresponds to a device configured with software executable to facilitate execution of native or user-submitted code (e.g., program code submitted by the owner of the data objects stored by the service 160) either internally on the service 160 or externally on the on-demand code execution system 120 (e.g., by specifying code execution environment rules that can be used to provide certain privileges to, or place restrictions on, the code being executed). Although illustrated as a separate component, the code execution control engine 174 may in some cases be integrated into the frontend(s) 162 or another component of the service 160.

The client devices 102, object storage service 160, and on-demand code execution system 120 may communicate via a network 104, which may include any wired network, wireless network, or combination thereof. For example, the network 104 may be a personal area network, local area network, wide area network, over-the-air broadcast network (e.g., for radio or television), cable network, satellite network, cellular telephone network, or combination thereof. As a further example, the network 104 may be a publicly accessible network of linked networks, possibly operated by various distinct parties, such as the Internet. In some embodiments, the network 104 may be a private or semi-private network, such as a corporate or university intranet. The network 104 may include one or more wireless networks, such as a Global System for Mobile Communications (GSM) network, a Code Division Multiple Access (CDMA) network, a Long Term Evolution (LTE) network, or any other type of wireless network. The network 104 can use protocols and components for communicating via the Internet or any of the other aforementioned types of networks. For example, the protocols used by the network 104 may include Hypertext Transfer Protocol (HTTP), HTTP Secure (HTTPS), Message Queue Telemetry Transport (MQTT), Constrained Application Protocol (CoAP), and the like. Protocols and components for communicating via the Internet or any of the other aforementioned types of communication networks are well known to those skilled in the art and, thus, are not described in more detail herein.

To enable interaction with the on-demand code execution system 120, the system 120 includes one or more frontends 130, which enable interaction with the on-demand code execution system 120. In an illustrative embodiment, the frontends 130 serve as a "front door" to the other services provided by the on-demand code execution system 120, enabling users (via client devices 102) or the service 160 to provide, request execution of, and view results of computer executable code. The frontends 130 include a variety of components to enable interaction between the on-demand code execution system 120 and other computing devices. For example, each frontend 130 may include a request interface providing client devices 102 and the service 160 with the ability to upload or otherwise communication user-specified code to the on-demand code execution system 120 and to thereafter request execution of that code. In one embodiment, the request interface communicates with external computing devices (e.g., client devices 102, frontend 162, etc.) via a graphical user interface (GUI), CLI, or API. The frontends 130 process the requests and make sure that the requests are properly authorized. For example, the frontends 130 may determine whether the user associated with the request is authorized to access the user code specified in the request.

References to user code as used herein may refer to any program code (e.g., a program, routine, subroutine, thread, etc.) written in a specific program language. In the present disclosure, the terms "code," "user code," and "program code," may be used interchangeably. Such user code may be executed to achieve a specific function, for example, in connection with a particular data transformation developed by the user. As noted above, individual collections of user code (e.g., to achieve a specific function) are referred to herein as "tasks," while specific executions of that code (including, e.g., compiling code, interpreting code, or otherwise making the code executable) are referred to as "task executions" or simply "executions." Tasks may be written, by way of non-limiting example, in JavaScript (e.g., node.js), Java, Python, or Ruby (or another programming language).

To manage requests for code execution, the frontend 130 can include an execution queue, which can maintain a record of requested task executions. Illustratively, the number of simultaneous task executions by the on-demand code execution system 120 is limited, and as such, new task executions initiated at the on-demand code execution system 120 (e.g., via an API call, via a call from an executed or executing task, etc.) may be placed on the execution queue and processed, e.g., in a first-in-first-out order. In some embodiments, the on-demand code execution system 120 may include multiple execution queues, such as individual execution queues for each user account. For example, users of the service provider system 110 may desire to limit the rate of task executions on the on-demand code execution system 120 (e.g., for cost reasons). Thus, the on-demand code execution system 120 may utilize an account-specific execution queue to throttle the rate of simultaneous task executions by a specific user account. In some instances, the on-demand code execution system 120 may prioritize task executions, such that task executions of specific accounts or of specified priorities bypass or are prioritized within the execution queue. In other instances, the on-demand code execution system 120 may execute tasks immediately or substantially immediately after receiving a call for that task, and thus, the execution queue may be omitted.

The frontend 130 can further include an output interface configured to output information regarding the execution of tasks on the on-demand code execution system 120. Illustratively, the output interface may transmit data regarding task executions (e.g., results of a task, errors related to the task execution, or details of the task execution, such as total time required to complete the execution, total data processed via the execution, etc.) to the client devices 102 or the object storage service 160.

In some embodiments, the on-demand code execution system 120 may include multiple frontends 130. In such embodiments, a load balancer may be provided to distribute the incoming calls to the multiple frontends 130, for example, in a round-robin fashion. In some embodiments, the manner in which the load balancer distributes incoming calls to the multiple frontends 130 may be based on the location or state of other components of the on-demand code execution system 120. For example, a load balancer may distribute calls to a geographically nearby frontend 130, or to a frontend with capacity to service the call. In instances where each frontend 130 corresponds to an individual instance of another component of the on-demand code execution system 120, such as the active pool 148 described below, the load balancer may distribute calls according to the capacities or loads on those other components. Calls may in some instances be distributed between frontends 130 deterministically, such that a given call to execute a task will always (or almost always) be routed to the same frontend 130. This may, for example, assist in maintaining an accurate execution record for a task, to ensure that the task executes only a desired number of times. For example, calls may be distributed to load balance between frontends 130. Other distribution techniques, such as anycast routing, will be apparent to those of skill in the art.

The on-demand code execution system 120 further includes one or more worker managers 140 that manage the execution environments, such as virtual machine instances 150 (shown as VM instance 150A and 150B, generally referred to as a "VM"), used for servicing incoming calls to execute tasks. While the following will be described with reference to virtual machine instances 150 as examples of such environments, embodiments of the present disclosure may utilize other environments, such as software containers. In the example illustrated in FIG. 1, each worker manager 140 manages an active pool 148, which is a group (sometimes referred to as a pool) of virtual machine instances 150 executing on one or more physical host computing devices that are initialized to execute a given task (e.g., by having the code of the task and any dependency data objects loaded into the instance).

Although the virtual machine instances 150 are described here as being assigned to a particular task, in some embodiments, the instances may be assigned to a group of tasks, such that the instance is tied to the group of tasks and any tasks of the group can be executed within the instance. For example, the tasks in the same group may belong to the same security group (e.g., based on their security credentials) such that executing one task in a container on a particular instance 150 after another task has been executed in another container on the same instance does not pose security risks. As discussed below, a task may be associated with permissions encompassing a variety of aspects controlling how a task may execute. For example, permissions of a task may define what network connections (if any) can be initiated by an execution environment of the task. As another example, permissions of a task may define what authentication information is passed to a task, controlling what network-accessible resources are accessible to execution of a task (e.g., objects on the service 160). In one embodiment, a security group of a task is based on one or more such permissions. For example, a security group may be defined based on a combination of permissions to initiate network connections and permissions to access network resources. As another example, the tasks of the group may share common dependencies, such that an environment used to execute one task of the group can be rapidly modified to support execution of another task within the group.

Once a triggering event to execute a task has been successfully processed by a frontend 130, the frontend 130 passes a request to a worker manager 140 to execute the task. In one embodiment, each frontend 130 may be associated with a corresponding worker manager 140 (e.g., a worker manager 140 co-located or geographically nearby to the frontend 130) and thus, the frontend 130 may pass most or all requests to that worker manager 140. In another embodiment, a frontend 130 may include a location selector configured to determine a worker manager 140 to which to pass the execution request. In one embodiment, the location selector may determine the worker manager 140 to receive a call based on hashing the call, and distributing the call to a worker manager 140 selected based on the hashed value (e.g., via a hash ring). Various other mechanisms for distributing calls between worker managers 140 will be apparent to one of skill in the art.

Thereafter, the worker manager 140 may modify a virtual machine instance 150 (if necessary) and execute the code of the task within the instance 150. As shown in FIG. 1, respective instances 150 may have operating systems (OS) 152 (shown as OS 152A and 152B), language runtimes 154 (shown as runtime 154A and 154B), and user code 156 (shown as user code 156A and 156B). The OS 152, runtime 1 54, and user code 156 may collectively enable execution of the user code to implement the task. Thus, via operation of the on-demand code execution system 120, tasks may be rapidly executed within an execution environment.

In accordance with aspects of the present disclosure, each VM 150 additionally includes staging code 157 executable to facilitate staging of input data on the VM 150 and handling of output data written on the VM 150, as well as a VM data store 158 accessible through a local file system of the VM 150. Illustratively, the staging code 157 represents a process executing on the VM 150 (or potentially a host device of the VM 150) and configured to obtain data from the object storage service 160 and place that data into the VM data store 158. The staging code 157 can further be configured to obtain data written to a file within the VM data store 158, and to transmit that data to the object storage service 160. Because such data is available at the VM data store 158, user code 156 is not required to obtain data over a network, simplifying user code 156 and enabling further restriction of network communications by the user code 156, thus increasing security. Rather, as discussed above, user code 156 may interact with input data and output data as files on the VM data store 158, by use of file handles passed to the code 156 during an execution. In some embodiments, input and output data may be stored as files within a kernel-space file system of the data store 158. In other instances, the staging code 157 may provide a virtual file system, such as a filesystem in userspace (FUSE) interface, which provides an isolated file system accessible to the user code 156, such that the user code's access to the VM data store 158 is restricted.

As used herein, the term "local file system" generally refers to a file system as maintained within an execution environment, such that software executing within the environment can access data as file, rather than via a network connection. In accordance with aspects of the present disclosure, the data storage accessible via a local file system may itself be local (e.g., local physical storage), or may be remote (e.g., accessed via a network protocol, like NFS, or represented as a virtualized block device provided by a network-accessible service). Thus, the term "local file system" is intended to describe a mechanism for software to access data, rather than physical location of the data.

The VM data store 158 can include any persistent or non-persistent data storage device. In one embodiment, the VM data store 158 is physical storage of the host device, or a virtual disk drive hosted on physical storage of the host device. In another embodiment, the VM data store 158 is represented as local storage, but is in fact a virtualized storage device provided by a network accessible service. For example, the VM data store 158 may be a virtualized disk drive provided by a network-accessible block storage service. In some embodiments, the object storage service 160 may be configured to provide file-level access to objects stored on the data stores 168, thus enabling the VM data store 158 to be virtualized based on communications between the staging code 157 and the service 160. For example, the object storage service 160 can include a file-level interface 166 providing network access to objects within the data stores 168 as files. The file-level interface 166 may, for example, represent a network-based file system server (e.g., a network file system (NFS)) providing access to objects as files, and the staging code 157 may implement a client of that server, thus providing file-level access to objects of the service 160.

In some instances, the VM data store 158 may represent virtualized access to another data store executing on the same host device of a VM instance 150. For example, an active pool 148 may include one or more data staging VM instances (not shown in FIG. 1), which may be co-tenanted with VM instances 150 on the same host device. A data staging VM instance may be configured to support retrieval and storage of data from the service 160 (e.g., data objects or portions thereof, input data passed by client devices 102, etc.), and storage of that data on a data store of the data staging VM instance. The data staging VM instance may, for example, be designated as unavailable to support execution of user code 156, and thus be associated with elevated permissions relative to instances 150 supporting execution of user code. The data staging VM instance may make this data accessible to other VM instances 150 within its host device (or, potentially, on nearby host devices), such as by use of a network-based file protocol, like NFS. Other VM instances 150 may then act as clients to the data staging VM instance, enabling creation of virtualized VM data stores 158 that, from the point of view of user code 156A, appear as local data stores. Beneficially, network-based access to data stored at a data staging VM can be expected to occur very quickly, given the co-location of a data staging VM and a VM instance 150 within a host device or on nearby host devices.

While some examples are provided herein with respect to use of IO stream handles to read from or write to a VM data store 158, IO streams may additionally be used to read from or write to other interfaces of a VM instance 150 (while still removing a need for user code 156 to conduct operations other than stream-level operations, such as creating network connections). For example, staging code 157 may "pipe" input data to an execution of user code 156 as an input stream, the output of which may be "piped" to the staging code 157 as an output stream. As another example, a staging VM instance or a hypervisor to a VM instance 150 may pass input data to a network port of the VM instance 150, which may be read-from by staging code 157 and passed as an input stream to the user code 157. Similarly, data written to an output stream by the task code 156 may be written to a second network port of the instance 150A for retrieval by the staging VM instance or hypervisor. In yet another example, a hypervisor to the instance 150 may pass input data as data written to a virtualized hardware input device (e.g., a keyboard) and staging code 157 may pass to the user code 156 a handle to the IO stream corresponding to that input device. The hypervisor may similarly pass to the user code 156 a handle for an IO stream corresponding to an virtualized hardware output device, and read data written to that stream as output data. Thus, the examples provided herein with respect to file streams may generally be modified to relate to any IO stream.

The object storage service 160 and on-demand code execution system 120 are depicted in FIG. 1 as operating in a distributed computing environment including several computer systems that are interconnected using one or more computer networks (not shown in FIG. 1). The object storage service 160 and on-demand code execution system 120 could also operate within a computing environment having a fewer or greater number of devices than are illustrated in FIG. 1. Thus, the depiction of the object storage service 160 and on-demand code execution system 120 in FIG. 1 should be taken as illustrative and not limiting to the present disclosure. For example, the on-demand code execution system 120 or various constituents thereof could implement various Web services components, hosted or "cloud" computing environments, or peer to peer network configurations to implement at least a portion of the processes described herein. In some instances, the object storage service 160 and on-demand code execution system 120 may be combined into a single service. Further, the object storage service 160 and on-demand code execution system 120 may be implemented directly in hardware or software executed by hardware devices and may, for instance, include one or more physical or virtual servers implemented on physical computer hardware configured to execute computer executable instructions for performing various features that will be described herein. The one or more servers may be geographically dispersed or geographically co-located, for instance, in one or more data centers. In some instances, the one or more servers may operate as part of a system of rapidly provisioned and released computing resources, often referred to as a "cloud computing environment."

In the example of FIG. 1, the object storage service 160 and on-demand code execution system 120 are illustrated as connected to the network 104. In some embodiments, any of the components within the object storage service 160 and on-demand code execution system 120 can communicate with other components of the on-demand code execution system 120 via the network 104. In other embodiments, not all components of the object storage service 160 and on-demand code execution system 120 are capable of communicating with other components of the virtual environment 100. In one example, only the frontends 130 and 162 (which may in some instances represent multiple frontends) may be connected to the network 104, and other components of the object storage service 160 and on-demand code execution system 120 may communicate with other components of the environment 100 via the respective frontends 130 and 162.

While some functionalities are generally described herein with reference to an individual component of the object storage service 160 and on-demand code execution system 120, other components or a combination of components may additionally or alternatively implement such functionalities. For example, while the object storage service 160 is depicted in FIG. 1 as including an object manipulation engine 170, functions of that engine 170 may additionally or alternatively be implemented as tasks on the on-demand code execution system 120. Moreover, while the on-demand code execution system 120 is described as an example system to apply data manipulation tasks, other compute systems may be used to execute user-defined tasks, which compute systems may include more, fewer or different components than depicted as part of the on-demand code execution system 120. In a simplified example, the object storage service 160 may include a physical computing device configured to execute user-defined tasks on demand, thus representing a compute system usable in accordance with embodiments of the present disclosure. Thus, the specific configuration of elements within FIG. 1 is intended to be illustrative.

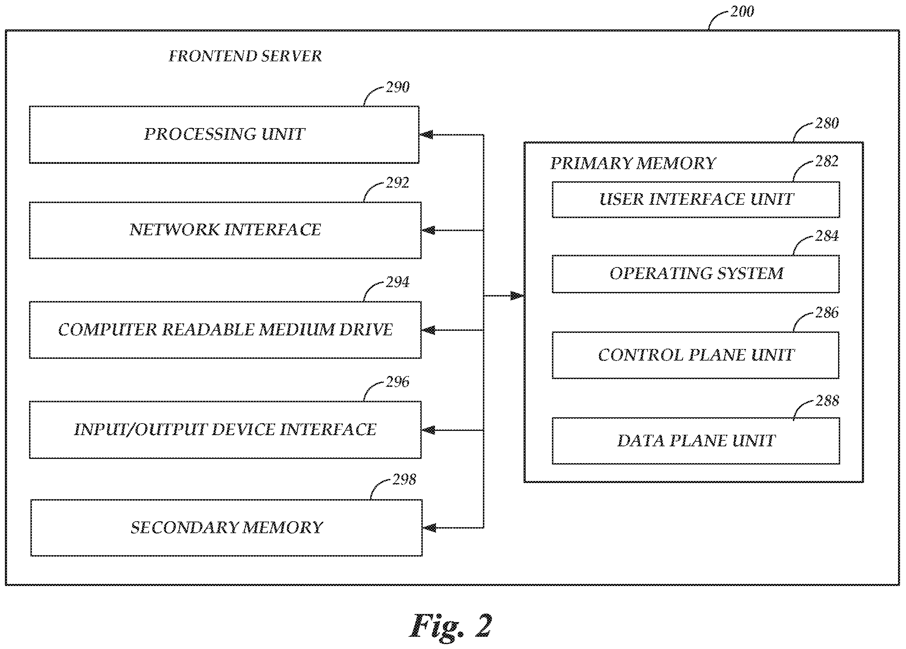

FIG. 2 depicts a general architecture of a frontend server 200 computing device implementing a frontend 162 of FIG. 1. The general architecture of the frontend server 200 depicted in FIG. 2 includes an arrangement of computer hardware and software that may be used to implement aspects of the present disclosure. The hardware may be implemented on physical electronic devices, as discussed in greater detail below. The frontend server 200 may include many more (or fewer) elements than those shown in FIG. 2. It is not necessary, however, that all of these generally conventional elements be shown in order to provide an enabling disclosure. Additionally, the general architecture illustrated in FIG. 2 may be used to implement one or more of the other components illustrated in FIG. 1.

As illustrated, the frontend server 200 includes a processing unit 290, a network interface 292, a computer readable medium drive 294, and an input/output device interface 296, all of which may communicate with one another by way of a communication bus. The network interface 292 may provide connectivity to one or more networks or computing systems. The processing unit 290 may thus receive information and instructions from other computing systems or services via the network 104. The processing unit 290 may also communicate to and from primary memory 280 or secondary memory 298 and further provide output information for an optional display (not shown) via the input/output device interface 296. The input/output device interface 296 may also accept input from an optional input device (not shown).

The primary memory 280 or secondary memory 298 may contain computer program instructions (grouped as units in some embodiments) that the processing unit 290 executes in order to implement one or more aspects of the present disclosure. These program instructions are shown in FIG. 2 as included within the primary memory 280, but may additionally or alternatively be stored within secondary memory 298. The primary memory 280 and secondary memory 298 correspond to one or more tiers of memory devices, including (but not limited to) RAM, 3D XPOINT memory, flash memory, magnetic storage, and the like. The primary memory 280 is assumed for the purposes of description to represent a main working memory of the worker manager 140, with a higher speed but lower total capacity than secondary memory 298.

The primary memory 280 may store an operating system 284 that provides computer program instructions for use by the processing unit 290 in the general administration and operation of the frontend server 200. The memory 280 may further include computer program instructions and other information for implementing aspects of the present disclosure. For example, in one embodiment, the memory 280 includes a user interface unit 282 that generates user interfaces (or instructions therefor) for display upon a computing device, e.g., via a navigation or browsing interface such as a browser or application installed on the computing device.

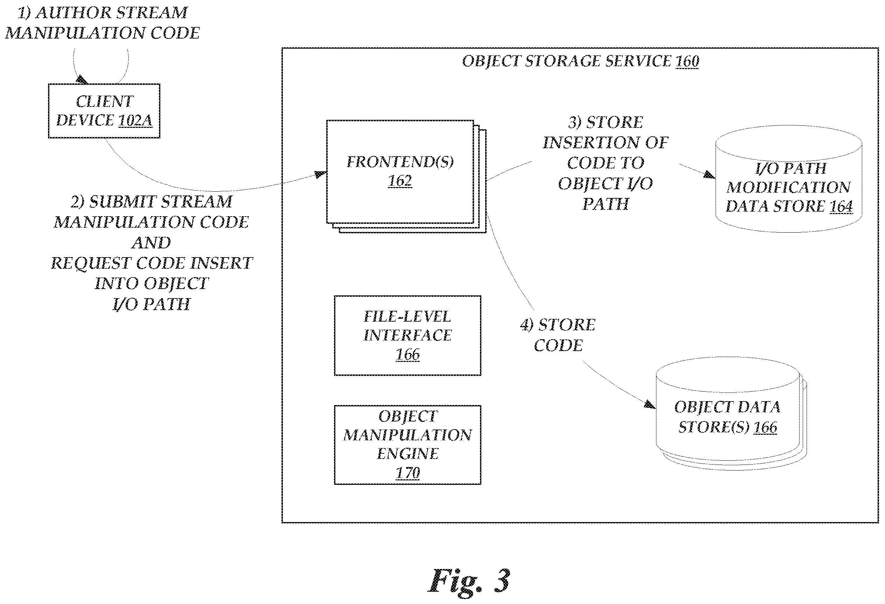

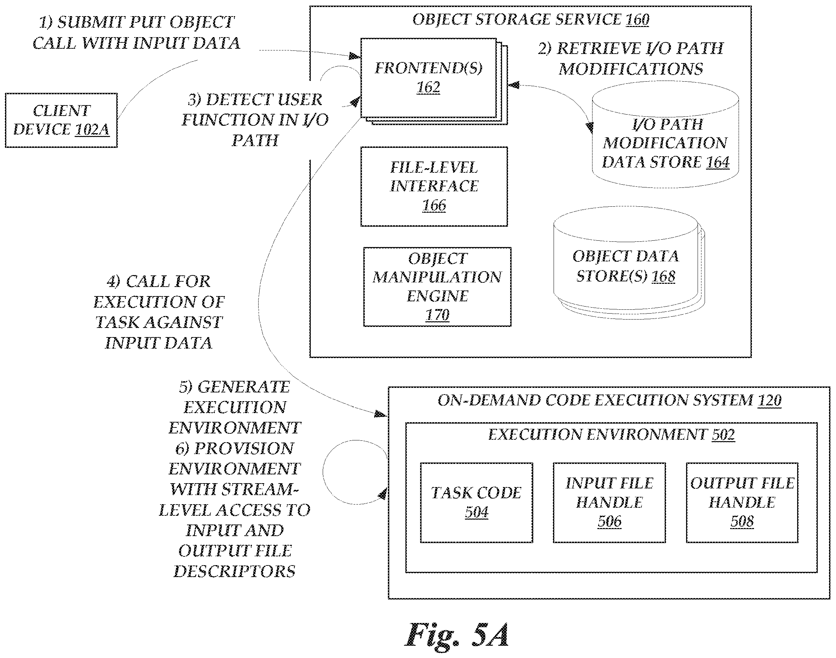

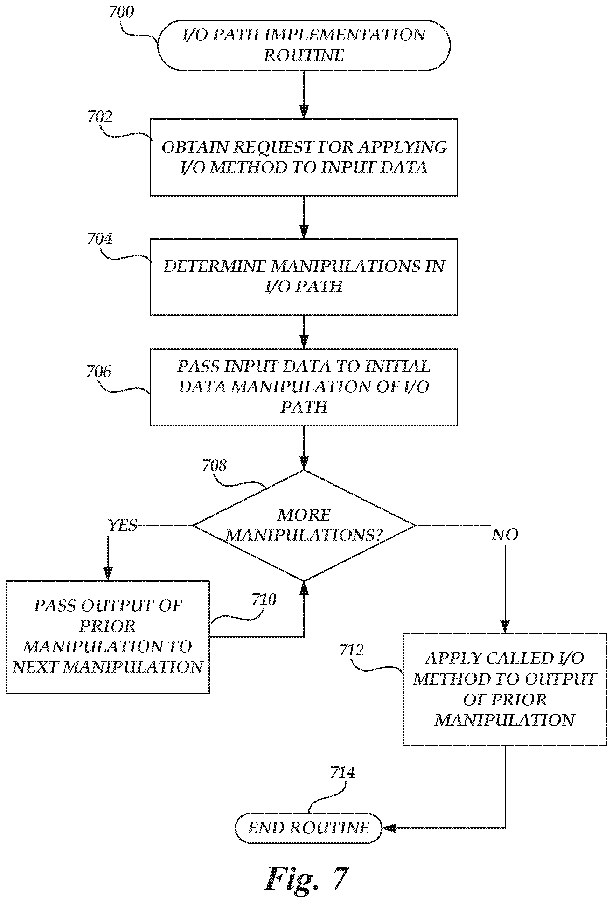

In addition to or in combination with the user interface unit 282, the memory 280 may include a control plane unit 286 and data plane unit 288 each executable to implement aspects of the present disclosure. Illustratively, the control plane unit 286 may include code executable to enable owners of data objects or collections of objects to attach manipulations, serverless functions, or data processing pipelines to an I/O path, in accordance with embodiments of the present disclosure. For example, the control plane unit 286 may enable the frontend 162 to implement the interactions of FIG. 3. The data plane unit 288 may illustratively include code enabling handling of I/O operations on the object storage service 160, including implementation of manipulations, serverless functions, or data processing pipelines attached to an I/O path (e.g., via the interactions of FIGS. 5A-6B, implementation of the routines of FIGS. 7-8, etc.).

The frontend server 200 of FIG. 2 is one illustrative configuration of such a device, of which others are possible. For example, while shown as a single device, a frontend server 200 may in some embodiments be implemented as multiple physical host devices. Illustratively, a first device of such a frontend server 200 may implement the control plane unit 286, while a second device may implement the data plane unit 288.

While described in FIG. 2 as a frontend server 200, similar components may be utilized in some embodiments to implement other devices shown in the environment 100 of FIG. 1. For example, a similar device may implement a worker manager 140, as described in more detail in U.S. Patent No. 9,323,556, entitled "PROGRAMMATIC EVENT DETECTION AND MESSAGE GENERATION FOR REQUESTS TO EXECUTE PROGRAM CODE," and filed September 30, 2014 (the "'556 Patent"), the entirety of which is hereby incorporated by reference.

With reference to FIG. 3, illustrative interactions are depicted for enabling a client device 102A to modify an I/O path for one or more objects on an object storage service 160 by inserting a data manipulation into the I/O path, which manipulation is implemented within a task executable on the on-demand code execution system 120.

The interactions of FIG. 3 begin at (1), where the client device 102A authors the stream manipulation code. The code can illustratively function to access an input file handle provided on execution of the program (which may, for example, be represented by the standard input stream for a program, commonly "stdin"), perform manipulations on data obtained from that file handle, and write data to an output file handle provided on execution of the program (which may, for example, by represented by the standard output stream for a program, commonly "stdout").

While examples are discussed herein with respect to a "file" handle, embodiments of the present disclosure may utilize handles providing access to any operating-system-level input/output (IO) stream, examples of which include byte streams, character streams, file streams, and the like. As used herein, the term operating-system-level input/output stream (or simply an "IO stream") is intended to refer to a stream of data for which an operating system provides a defined set of functions, such as seeking within the stream, reading from a stream, and writing to a stream. Streams may be created in various manners. For example, a programming language may generate a stream by use of a function library to open a file on a local operating system, or a stream may be created by use of a "pipe" operator (e.g., within an operating system shell command language). As will be appreciated by one skilled in the art, most general purpose programming languages include, as basic functionality of the code, the ability to interact with streams.

In accordance with embodiments of the present disclosure, task code may be authored to accept, as a parameter of the code, an input handle and an output handle, both representing IO streams (e.g., an input stream and an output stream, respectively). The code may then manipulate data of the input stream, and write an output to the output stream. Given use of a general purpose programming language, any of a variety of functions may be implemented according to the desires of the user. For example, a function may search for and remove confidential information from the input stream. While some code may utilize only input and output handles, other code may implement additional interfaces, such as network communication interfaces. However, by providing the code with access to input and output streams (via respective handles) created outside of the code, the need for the code to create such streams is removed. Moreover, because streams may be created outside of the code, and potentially outside of an execution environment of the code, stream manipulation code need not necessarily be trusted to conduct certain operations that may be necessary to create a stream. For example, a stream may represent information transmitted over a network connection, without the code being provided with access to that network connection. Thus, use of IO streams to pass data into and out of code executions can simplify code while increasing security.

As noted above, the code may be authored in a variety of programming languages. Authoring tools for such languages are known in the art and thus will not be described herein. While authoring is described in FIG. 3 as occurring on the client device 102A, the service 160 may in some instances provide interfaces (e.g., web GUIs) through which to author or select code.

At (2), the client device 102A submits the stream manipulation code to the frontend 162 of the service 160, and requests that an execution of the code be inserted into an I/O path for one or more objects. Illustratively, the frontends 162 may provide one or more interfaces to the device 102A enabling submission of the code (e.g., as a compressed file). The frontends 162 may further provide interfaces enabling designation of one or more I/O paths to which an execution of the code should be applied. Each I/O path may correspond, for example, to an object or collection of objects (e.g., a "bucket" of objects). In some instances, an I/O path may further corresponding to a given way of accessing such object or collection (e.g., a URI through which the object is created), to one or more accounts attempting to access the object or collection, or to other path criteria. Designation of the path modification is then stored in the I/O path modification data store 164, at (3). Additionally, the stream manipulation code is stored within the object data stores 166 at (4).

As such, when an I/O request is received via the specified I/O path, the service 160 is configured to execute the stream manipulation code against input data for the request (e.g., data provided by the client device 102A or an object of the service 160, depending on the I/O request), before then applying the request to the output of the code execution. In this manner, a client device 102A (which in FIG. 3 illustratively represents an owner of an object or object collection) can obtain greater control over data stored on and retrieved from the object storage service 160.

The interactions of FIG. 3 generally relate to insertion of a single data manipulation into the I/O path of an object or collection on the service 160. However, in some embodiments of the present disclosure an owner of an object or collection is enabled to insert multiple data manipulations into such an I/O path. Each data manipulation may correspond, for example, to a serverless code-based manipulation or a native manipulation of the service 160. For example, assume an owner has submitted a data set to the service 160 as an object, and that the owner wishes to provide an end user with a filtered view of a portion of that data set. While the owner could store that filtered view of the portion as a separate object and provide the end user with access to that separate object, this results in data duplication on the service 160. In the case that the owner wishes to provide multiple end users with different portions of the data set, potentially with customized filters, that data duplication grows, resulting in significant inefficiencies. In accordance with the present disclosure, another option may be for the owner to author or obtain custom code to implement different filters on different portions of the object, and to insert that code into the I/O path for the object. However, this approach may require the owner to duplicate some native functionality of the service 160 (e.g., an ability to retrieve a portion of a data set). Moreover, this approach would inhibit modularity and reusability of code, since a single set of code would be required to conduct two functions (e.g., selecting a portion of the data and filtering that portion).

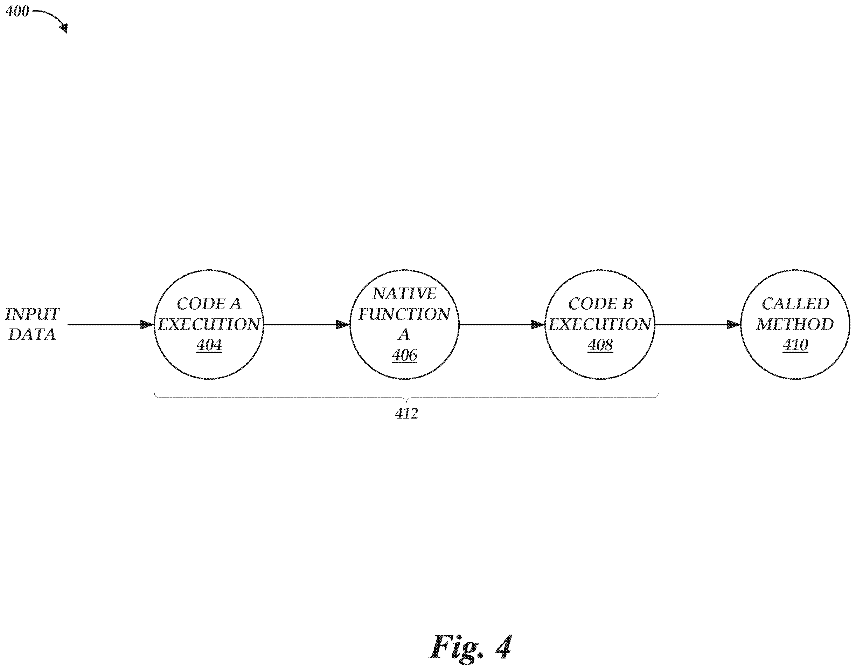

To address these shortcomings, embodiments of the present disclosure enable an owner to create a pipeline of data manipulations to be applied to an I/O path, linking together multiple data manipulations, each of which may also be inserted into other I/O paths. An illustrative visualization of such a pipeline is shown in FIG. 4 as pipeline 400. Specifically, the pipeline 400 illustrates a series of data manipulations that an owner specifies are to occur on calling of a request method against an object or object collection. As shown in FIG. 4, the pipeline begins with input data, specified within the call according to a called request method. For example, a PUT call may generally include the input data as the data to be stored, while a GET call may generally include the input data by reference to a stored object. A LIST call may specify a directory, a manifest of which is the input data to the LIST request method.

Contrary to typical implementations of request methods, in the illustrative pipeline 400, the called request method is not initially applied to the input data. Rather, the input data is initially passed to an execution of "code A" 404, where code A represents a first set of user-authored code. The output of that execution is then passed to "native function A" 406, which illustratively represents a native function of the service 160, such as a "SELECT" or byte-range function implemented by the object manipulation engine 170. The output of that native function 406 is then passed to an execution of "code B" 408, which represents a second set of user-authored code. Thereafter, the output of that execution 408 is passed to the called request method 410 (e.g., GET, PUT, LIST, etc.). Accordingly, rather than the request method being applied to the input data as in conventional techniques, in the illustration of FIG. 4, the request method is applied to the output of the execution 408, which illustratively represents a transformation of the input data according to one or more owner-specified manipulations 412. Notably, implementation of the pipeline 400 may not require any action or imply any knowledge of the pipeline 400 on the part of a calling client device 102. As such, implementation of pipelines can be expected not to impact existing mechanisms of interacting with the service 160 (other than altering the data stored on or retrieved from the service 160 in accordance with the pipeline). For example, implementation of a pipeline can be expected not to require reconfiguration of existing programs utilizing an API of the service 160.

While the pipeline 400 of FIG. 4 is linear, in some embodiments the service 160 may enable an owner to configure non-linear pipelines, such as by include conditional or branching nodes within the pipeline. Illustratively, as described in more detail below, data manipulations (e.g., serverless-based functions) can be configured to include a return value, such as an indication of successful execution, encountering an error, etc. In one example, the return value of a data manipulation may be used to select a conditional branch within a branched pipeline, such that a first return value causes the pipeline to proceed on a first branch, while a second return value causes the pipeline to proceed on a second branch. In some instances, pipelines may include parallel branches, such that data is copied or divided to multiple data manipulations, the outputs of which are passed to a single data manipulation for merging prior to executing the called method. The service 160 may illustratively provide a graphical user interface through which owners can create pipelines, such as by specifying nodes within the pipeline and linking those nodes together via logical connections. A variety of flow-based development interfaces are known and may be utilized in conjunction with aspects of the present disclosure.

Furthermore, in some embodiments, a pipeline applied to a particular I/O path may be generated on-the-fly, at the time of a request, based on data manipulations applied to the path according to different criteria. For example, an owner of a data collection may apply a first data manipulation to all interactions with objects within a collection, and a second data manipulation to all interactions obtained via a given URI. Thus, when a request is received to interact with an object within the collection and via the given URI, the service 160 may generate a pipeline combining the first and second data manipulations. The service 160 may illustratively implement a hierarchy of criteria, such that manipulations applied to objects are placed within the pipeline prior to manipulations applied to a URI, etc.

In some embodiments, client devices 102 may be enabled to request inclusion of a data manipulation within a pipeline. For example, within parameters of a GET request, a client device 102 may specify a particular data manipulation to be included within a pipeline applied in connection with the request. Illustratively, a collection owner may specify one or more data manipulations allowed for the collection, and further specify identifiers for those manipulations (e.g., function names). Thus, when requesting to interact with the collection, a client device 102 may specify the identifier to cause the manipulation to be included within a pipeline applied to the I/O path. In one embodiment, client-requested manipulations are appended to the end of a pipeline subsequent to owner-specified data manipulations and prior to implementing the requested request method. For example, where a client device 102 requests to GET a data set, and requests that a search function by applied to the data set before the GET method is implemented, the search function can receive as input data the output of an owner-specified data manipulations for the data set (e.g., manipulations to remove confidential information from the data set). In addition, requests may in some embodiments specify parameters to be passed to one or more data manipulations (whether specified within the request or not). Accordingly, while embodiments of the present disclosure can enable data manipulations without knowledge of those manipulations on the part of client devices 102, other embodiments may enable client devices 1 02 to pass information within an I/O request for use in implementing data manipulations.

Moreover, while example embodiments of the present disclosure are discussed with respect to manipulation of input data to a called method, embodiments of the present disclosure may further be utilized to modify aspects of a request, including a called method. For example, a serverless task execution may be passed the content of a request (including, e.g., a called method and parameters) and be configured to modify and return, as a return value to a frontend 162, a modified version of the method or parameters. Illustratively, where a client device 102 is authenticated as a user with access to only a portion of a data object, a serverless task execution may be passed a call to "GET" that data object, and may transform parameters of the GET request such that it applies only to a specific byte range of the data object corresponding to the portion that the user may access. As a further example, tasks may be utilized to implement customized parsing or restrictions on called methods, such as by limiting the methods a user may call, the parameters to those methods, or the like. In some instances, application of one or more functions to a request (e.g., to modify the method called or method parameters) may be viewed as a "pre-data processing" pipeline, and may thus be implemented prior to obtaining the input data within the pipeline 400 (which input data may change due to changes in the request), or may be implemented independently of a data manipulation pipeline 400.

Similarly, while example embodiments of the present disclosure are discussed with respect to application of a called method to output data of one or more data manipulations, in some embodiments manipulations can additionally or alternatively occur after application of a called method. For example, a data object may contain sensitive data that a data owner desires to remove prior to providing the data to a client. The owner may further enable a client to specify native manipulations to the data set, such as conducting a database query on the dataset (e.g., via a SELECT resource method). While the owner may specify a pipeline for the data set to cause filtering of sensitive data to be conducted prior to application of the SELECT method, such an order of operations may be undesirable, as filtering may occur with respect to the entire data object rather than solely the portion returned by the SELECT query. Accordingly, additionally or alternatively to specifying manipulations that occur prior to satisfying a request method, embodiments of the present disclosure can enable an owner to specify manipulations to occur subsequent to application of a called method but prior to conducting a final operation to satisfy a request. For example, in the case of a SELECT operation, the service 160 may first conduct the SELECT operation against specified input data (e.g., a data object), and then pass the output of that SELECT operation to a data manipulation, such as a serverless task execution. The output of that execution can then be returned to a client device 102 to satisfy the request.

While FIG. 3 and FIG. 4 are generally described with reference to serverless tasks authored by an owner of an object or collection, in some instances the service 160 may enable code authors to share their tasks with other users of the service 160, such that code of a first user is executed in the I/O path of an object owned by a second user. The service 160 may also provide a library of tasks for use by each user. In some cases, the code of a shared task may be provided to other users. In other cases, the code of the shared task may be hidden from other users, such that the other users can execute the task but not view code of the task. In these cases, other users may illustratively be enabled to modify specific aspects of code execution, such as the permissions under which the code will execute.

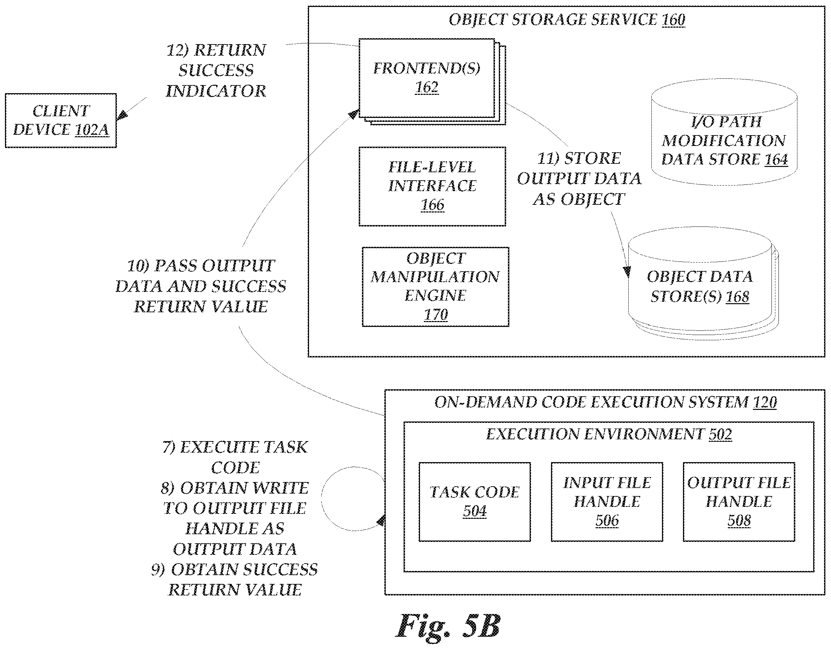

With reference to FIGS. 5A and 5B, illustrative interactions will be discussed for applying a modification to an I/O path for a request to store an object on the service 160, which request is referred to in connection with these figures as a "PUT" request or "PUT object call." While shown in two figures, numbering of interactions is maintained across FIGS. 5A and 5B.

The interactions begin at (1), where a client device 102A submits a PUT object call to the storage service 160, corresponding to a request to store input data (e.g., included or specified within the call) on the service 160. The input data may correspond, for example, to a file stored on the client device 102A. As shown in FIG. 5A, the call is directed to a frontend 162 of the service 162 that, at (2), retrieves from the I/O path modification data store 164 an indication of modifications to the I/O path for the call. The indication may reflect, for example, a pipeline to be applied to calls received on the I/O path. The I/O path for a call may generally be specified with respect to a request method included within a call, an object or collection of objects indicated within the call, a specific mechanism of reaching the service 160 (e.g., protocol, URI used, etc.), an identity or authentication status of the client device 102A, or a combination thereof. For example, in FIG. 5A, the I/O path used can correspond to use of a PUT request method directed to a particular URI (e.g., associated with the frontend 162) to store an object in a particular logical location on the service 160 (e.g., a specific bucket). In FIGS. 5A and 5B, it is assumed that an owner of that logical location has previously specified a modification to the I/O path, and specifically, has specified that a serverless function should be applied to the input data before a result of that function is stored in the service 160.

Accordingly, at (3), the frontend 162 detects within the modifications for the I/O path inclusion of a serverless task execution. Thus, at (4), the frontend 162 submits a call to the on-demand code execution system 120 to execute the task specified within the modifications against the input data specified within the call.

The on-demand code execution system 120, at (5), therefore generates an execution environment 502 in which to execute code corresponding to the task. Illustratively, the call may be directed to a frontend 130 of the system, which may distribute instructions to a worker manager 140 to select or generate a VM instance 150 in which to execute the task, which VM instance 150 illustratively represents the execution environment 502. During generation of the execution environment 502, the system 120 further provisions the environment with code 504 of the task indicated within the I/O path modification (which may be retrieved, for example, from the object data stores 166). While not shown in FIG. 5A, the environment 502 further includes other dependencies of the code, such as access to an operating system, a runtime required to execute the code, etc.

In some embodiments, generation of the execution environment 502 can include configuring the environment 502 with security constraints limiting access to network resources. Illustratively, where a task is intended to conduct data manipulation without reference to network resources, the environment 502 can be configured with no ability to send or receive information via a network. Where a task is intended to utilize network resources, access to such resources can be provided on a "whitelist" basis, such that network communications from the environment 502 are allowed only for specified domains, network addresses, or the like. Network restrictions may be implemented, for example, by a host device hosting the environment 502 (e.g., by a hypervisor or host operating system). In some instances, network access requirements may be utilized to assist in placement of the environment 502, either logically or physically. For example, where a task requires no access to network resources, the environment 502 for the task may be placed on a host device that is distant from other network-accessible services of the service provider system 110, such as an "edge" device with a lower-quality communication channel to those services. Where a task requires access to otherwise private network services, such as services implemented within a virtual private cloud (e.g., a local-area-network-like environment implemented on the service 160 on behalf of a given user), the environment 502 may be created to exist logically within that cloud, such that a task execution 502 accesses resources within the cloud. In some instances, a task may be configured to execute within a private cloud of a client device 102 that submits an I/O request. In other instances, a task may be configured to execute within a private cloud of an owner of the object or collection referenced within the request.

In addition to generating the environment 502, at (6), the system 120 provisions the environment with stream-level access to an input file handle 506 and an output file handle 508, usable to read from and write to the input data and output data of the task execution, respectively. In one embodiment, files handle 506 and 508 may point to a (physical or virtual) block storage device (e.g., disk drive) attached to the environment 502, such that the task can interact with a local file system to read input data and write output data. For example, the environment 502 may represent a virtual machine with a virtual disk drive, and the system 120 may obtain the input data from the service 160 and store the input data on the virtual disk drive. Thereafter, on execution of the code, the system 120 may pass to the code a handle of the input data as stored on the virtual disk drive, and a handle of a file on the drive to which to write output data. In another embodiment, files handle 506 and 508 may point to a network file system, such as an NFS-compatible file system, on which the input data has been stored. For example, the frontend 162 during processing of the call may store the input data as an object on the object data stores 166, and the file-level interface 166 may provide file-level access to the input data and to a file representing output data. In some cases, the file handles 506 and 508 may point to files on a virtual file system, such as a file system in user space. By providing handles 506 and 508, the task code 504 is enabled to read the input data and write output data using stream manipulations, as opposed to being required to implement network transmissions. Creation of the handles 506 and 508 (or streams corresponding to the handles) may illustratively be achieved by execution of staging code 157 within or associated with the environment 502,

The interactions of FIG. 5A are continued in FIG. 5B, where the system 120 executes the task code 504. As the task code 504 may be user-authored, any number of functionalities may be implemented within the code 504. However, for the purposes of description of FIGS. 5A and 5B, it will be assumed that the code 504, when executed, reads input data from the input file handle 506 (which may be passed as a commonly used input stream, such as stdin), manipulates the input data, and writes output data to the output file handle 508 (which may be passed as a commonly used output stream, such as stdout). Accordingly, at (8), the system 120 obtains data written to the output file (e.g., the file referenced in the output file handle) as output data of the execution. In addition, at (9), the system 120 obtains a return value of the code execution (e.g., a value passed in a final call of the function). For the purposes of description of FIGS. 5A and 5B, it will be assumed that the return value indicates success of the execution. At (10), the output data and the success return value are then passed to the frontend 162.

While shown as a single interaction in FIG. 5B, in some embodiments output data of a task execution and a return value of that execution may be returned separately. For example, during execution, task code 504 may write to an output file through the handle 508, and this data may be periodically or iteratively returned to the service 160. Illustratively, where the output file exists on a file system in user space implemented by staging code, the staging code may detect and forward each write to the output file to the frontend 162. Where the output file exists on a network file system, writes to the file may directly cause the written data to be transmitted to the interface 166 and thus the service 160. In some instances, transmitting written data iteratively may reduce the amount of storage required locally to the environment 502, since written data can, according to some embodiments, be deleted from local storage of the environment 502.

In addition, while a success return value is assumed in FIGS. 5A and 5B, other types of return value are possible and contemplated. For example, an error return value may be used to indicate to the frontend 162 that an error occurred during execution of task code 504. As another example, user-defined return values may be used to control how conditional branching within a pipeline proceeds. In some cases, the return value may indicate to the frontend 162 a request for further processing. For example, a task execution may return to the frontend 162 a call to execute another serverless task (potentially not specified within a path modification for the current I/O path). Moreover, return values may specify to the frontend 162 what return value is to be returned to the client device 102A. For example, a typical PUT request method called at the service 160 may be expected to return an HTTP 200 code ("OK"). As such, a success return value from the task code may further indicate that the frontend 162 should return an HTTP 200 code to the client device 102A. An error return value may, for example, indicate that the frontend 162 should return a 3XX HTTP redirection or 4XX HTTP error code to the client device 102A. Still further, in some cases, return values may specify to the frontend 162 content of a return message to the client device 102A other than a return value. For example, the frontend 162 may be configured to return a given HTTP code (e.g., 200) for any request from the client device 102A that is successfully retrieved at the frontend 162 and invokes a data processing pipeline. A task execution may then be configured to specify, within its return value, data to be passed to the client device 102A in addition to that HTTP code. Such data may illustratively include structured data (e.g., extensible markup language (XML) data) providing information generated by the task execution, such as data indicating success or failure of the task. This approach may beneficially enable the frontend 162 to quickly respond to requests (e.g., without awaiting execution of a task) while still enabling a task execution to pass information to the client device 102.

For purposes of the present illustration, it will be assumed that the success return value of the task indicates that an HTTP 2XX success response should be passed to the device 102A. Accordingly, on receiving output data, the frontend 162 stores the output data as an object within the object data stores 166, (11). Interaction (11) illustratively corresponds to implementation of the PUT request method, initially called for by the client device 102A, albeit by storing the output of the task execution rather than the provided input data. After implementing the called PUT request method, the frontend 162, at (12), returns to the client device 102A the success indicator indicated by the success return value of the task (e.g., an HTTP 200 response code). Thus, from the perspective of the client device 102A, a call to PUT an object on the storage service 160 resulted in creation of that object on the service 160. However, rather than storing the input data provided by the device 102A, the object stored on the service 160 corresponds to output data of an owner-specified task, thus enabling the owner of the object greater control over the contents of that object. In some use cases, the service 160 may additionally store the input data as an object (e.g., where the owner-specified task corresponds to code executable to provide output data usable in conjunction with the input data, such as checksum generated from the input data).

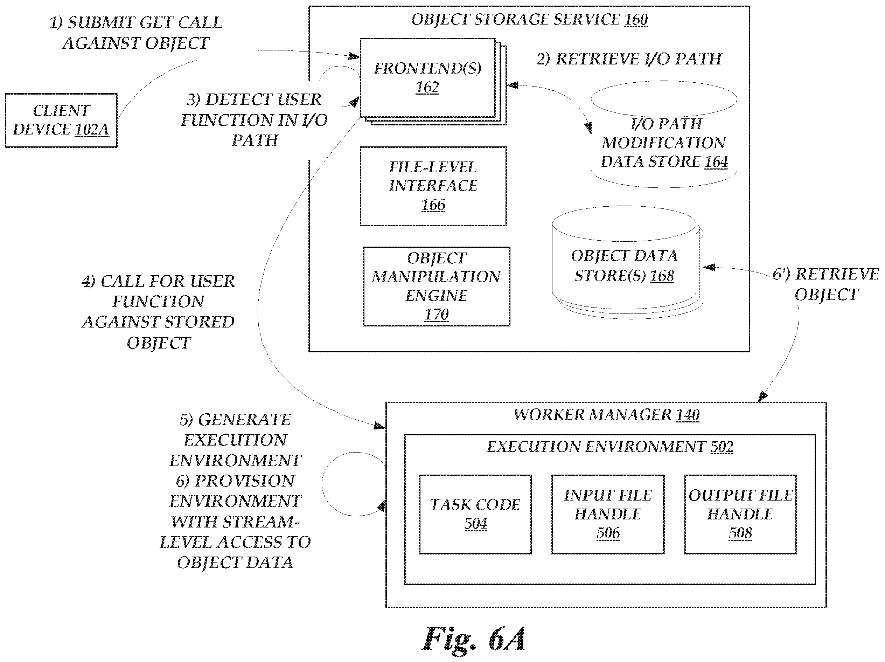

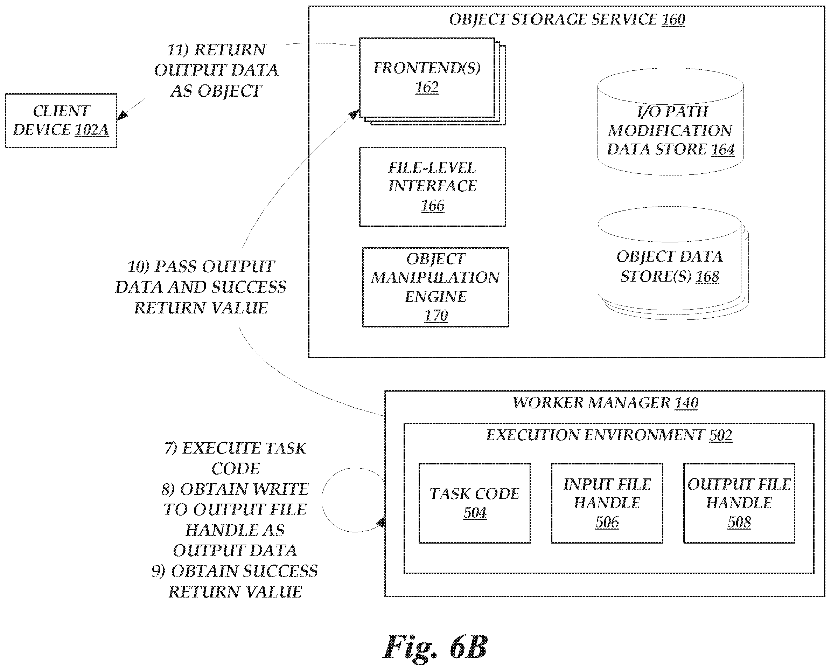

With reference to FIGS. 6A and 6B, illustrative interactions will be discussed for applying a modification to an I/O path for a request to retrieve an object on the service 160, which request is referred to in connection with these figures as a "GET" request or "GET call." While shown in two figures, numbering of interactions is maintained across FIGS. 6A and 6B.

The interactions begin at (1), where a client device 102A submits a GET call to the storage service 160, corresponding to a request to obtain data of an object (identified within the call) stored on the service 160. as shown in FIG. 6A, the call is directed to a frontend 162 of the service 160 that, at (2), retrieves from the I/O path modification data store 164 an indication of modifications to the I/O path for the call. For example, in FIG. 6A, the I/O path used can correspond to use of a GET request method directed to a particular URI (e.g., associated with the frontend 162) to retrieve an object in a particular logical location on the service 160 (e.g., a specific bucket). In FIGS. 6A and 6B, it is assumed that an owner of that logical location has previously specified a modification to the I/O path, and specifically, has specified that a serverless function should be applied to the object before a result of that function is returned to the device 102A as the requested object.

Accordingly, at (3), the frontend 162 detects within the modifications for the I/O path inclusion of a serverless task execution. Thus, at (4), the frontend 162 submits a call to the on-demand code execution system 120 to execute the task specified within the modifications against the object specified within the call. The on-demand code execution system 120, at (5), therefore generates an execution environment 502 in which to execute code corresponding to the task. Illustratively, the call may be directed to a frontend 130 of the system, which may distribute instructions to a worker manager 140 to select or generate a VM instance 150 in which to execute the task, which VM instance 150 illustratively represents the execution environment 502. During generation of the execution environment 502, the system 120 further provisions the environment with code 504 of the task indicated within the I/O path modification (which may be retrieved, for example, from the object data stores 166). While not shown in FIG. 6A, the environment 502 further includes other dependencies of the code, such as access to an operating system, a runtime required to execute the code, etc.

In addition, at (6), the system 120 provisions the environment with file-level access to an input file handle 506 and an output file handle 508, usable to read from and write to the input data (the object) and output data of the task execution, respectively. As discussed above, files handle 506 and 508 may point to a (physical or virtual) block storage device (e.g., disk drive) attached to the environment 502, such that the task can interact with a local file system to read input data and write output data. For example, the environment 502 may represent a virtual machine with a virtual disk drive, and the system 120 may obtain the object referenced within the call from the service 160, at (6'), and store the object on the virtual disk drive. Thereafter, on execution of the code, the system 120 may pass to the code a handle of the object as stored on the virtual disk drive, and a handle of a file on the drive to which to write output data. In another embodiment, files handle 506 and 508 may point to a network file system, such as an NFS-compatible file system, on which the object has been stored. For example, the file-level interface 166 may provide file-level access to the object as stored within the object data stores, as well as to a file representing output data. By providing handles 506 and 508, the task code 504 is enabled to read the input data and write output data using stream manipulations, as opposed to being required to implement network transmissions. Creation of the handles 506 and 508 may illustratively be achieved by execution of staging code 157 within or associated with the environment 502.

The interactions of FIG. 6A are continued in FIG. 6B, where the system 120 executes the task code 504 at (7). As the task code 504 may be user-authored, any number of functionalities may be implemented within the code 504. However, for the purposes of description of FIGS. 6A and 6B, it will be assumed that the code 504, when executed, reads input data (corresponding to the object identified within the call) from the input file handle 506 (which may be passed as a commonly used input stream, such as stdin), manipulates the input data, and writes output data to the output file handle 508 (which may be passed as a commonly used output stream, such as stdout). Accordingly, at (8), the system 120 obtains data written to the output file (e.g., the file referenced in the output file handle) as output data of the execution. In addition, at (9), the system 120 obtains a return value of the code execution (e.g., a value passed in a final call of the function). For the purposes of description of FIGS. 6A and 6B, it will be assumed that the return value indicates success of the execution. At (10), the output data and the success return value are then passed to the frontend 162.

On receiving output data and the return value, the frontend 162 returns the output data of the task execution as the requested object. Interaction (11) thus illustratively corresponds to implementation of the GET request method, initially called for by the client device 102A, albeit by returning the output of the task execution rather than the object specified within the call. From the perspective of the client device 102A, a call to GET an object from the storage service 160 therefore results in return of data to the client device 102A as the object. However, rather than returning the object as stored on the service 160, the data provided to the client device 102A corresponds to output data of an owner-specified task, thus enabling the owner of the object greater control over the data returned to the client device 102A.

Similarly to as discussed above with respect to FIGS. 5A and 5B, while shown as a single interaction in FIG. 6B, in some embodiments output data of a task execution and a return value of that execution may be returned separately. In addition, while a success return value is assumed in FIGS. 6A and 6B, other types of return value are possible and contemplated, such as error values, pipeline-control values, or calls to execute other data manipulations. Moreover, return values may indicate what return value is to be returned to the client device 102A (e.g., as an HTTP status code). In some instances, where output data is iteratively returned from a task execution, the output data may also be iteratively provided by the frontend 162 to the client device 102A. Where output data is large (e.g., on the order of hundreds of megabytes, gigabytes, etc.), iteratively returning output data to the client device 102A can enable that data to be provided as a stream, thus speeding delivery of the content to the device 102A relative to delaying return of the data until execution of the task completes.

While illustrative interactions are described above with reference to FIGS. 5A-6B, various modifications to these interactions are possible and contemplated herein. For example, while the interactions described above relate to manipulation of input data, in some embodiments a serverless task may be inserted into the I/O path of the service 160 to perform functions other than data manipulation. Illustratively, a serverless task may be utilized to perform validation or authorization with respect to a called request method, to verify that a client device 102A is authorized to perform the method. Task-based validation or authorization may enable functions not provided natively by the service 160. For example, consider a collection owner who wishes to limit certain client devices 102 to accessing only objects in the collection created during a certain time range (e.g., the last 30 days, any time excluding the last 30 days, etc.). While the service 160 may natively provide authorization on a per-object or per-collection basis, the service 160 may in some cases not natively provide authorization on a duration-since-creation basis. Accordingly, embodiments of the present disclosure enable the owner to insert into an I/O path to the collection (e.g., a GET path using a given URI to the collection) a serverless task that determines whether the client is authorized to retrieve a requested object based on a creation time of that object. Illustratively, the return value provided by an execution of the task may correspond to an "authorized" or "unauthorized" response. In instances where a task does not perform data manipulation, it may be unnecessary to provision an environment of the task execution with input and output stream handles. Accordingly, the service 160 and system 120 can be configured to forego provisioning the environment with such handles in these cases. Whether a task implements data manipulation may be specified, for example, on creation of the task and stored as metadata for the task (e.g., within the object data stores 166). The service 160 may thus determine from that metadata whether data manipulation within the task should be supported by provisioning of appropriate stream handles.

While some embodiments may utilize return values without use of stream handles, other embodiments may instead utilize stream handles without use of return values. For example, while the interactions described above relate to providing a return value of a task execution to the storage service 160, in some instances the system 120 may be configured to detect completion of a function based on interaction with an output stream handle. Illustratively, staging code within an environment (e.g., providing a file system in user space or network-based file system) may detect a call to deallocate the stream handle (e.g., by calling a "file.close()" function or the like). The staging code may interpret such a call as successful completion of the function, and notify the service 160 of successful completion without requiring the task execution to explicitly provide return value.

While the interactions described above generally relate to passing of input data to a task execution, additional or alternative information may be passed to the execution. By way of non-limiting example, such information may include the content of the request from the client device 102 (e.g., the HTTP data transmitted), metadata regarding the request (e.g., a network address from which the request was received or a time of the request), metadata regarding the client device 102 (e.g., an authentication status of the device, account time, or request history), or metadata regarding the requested object or collection (e.g., size, storage location, permissions, or time created, modified, or accessed). Moreover, in addition or as an alternative to manipulation of input data, task executions may be configured to modify metadata regarding input data, which may be stored together with the input data (e.g., within the object) and thus written by way of an output stream handle, or which may be separately stored and thus modified by way of a metadata stream handle, inclusion of metadata in a return value, or separate network transmission to the service 160.

With reference to FIG. 7, an illustrative routine 700 for implementing owner-defined functions in connection with an I/O request obtained at the object storage service of FIG. 1 over an I/O path will be described. The routine 700 may illustratively be implemented subsequent to association of an I/O path (e.g., defined in terms of an object or collection, a mechanism of access to the object or collection, such as a URI, an account transmitting an IO request, etc.) with a pipeline of data manipulations. For example, the routine 700 may be implemented prior to the interactions of FIG. 3, discussed above. The routine 700 is illustratively implemented by a frontend 162.

The routine 700 begins at block 702, where the frontend 162 obtains a request to apply an I/O method to input data. The request illustratively corresponds to a client device (e.g., an end user device). The I/O method may correspond, for example, to an HTTP request method, such as GET, PUT, LIST, DELETE, etc. The input data may be included within the request (e.g., within a PUT request), or referenced in the request (e.g., as an existing object on the object storage service 160.

At block 704, the frontend 162 determines one or more data manipulations in the I/O path for the request. As noted above, the I/O path may be defined based on a variety of criteria (or combinations thereof), such as the object or collection referenced in the request, a URI through which the request was transmitted, an account associated with the request, etc. Manipulations for each defined I/O path may illustratively be stored at the object storage service 160. Accordingly, at block 704, the frontend 162 may compare parameters of the I/O path for the request to stored data manipulations at the object storage service 160to determine data manipulations inserted into the I/O path. In one embodiment, the manipulations form a pipeline, such as the pipeline 400 of FIG. 4, which may be previously stored or constructed by the frontend 162 at block 704 (e.g., by combining multiple manipulations that apply to the I/O path). In some instances, an additional data manipulation may be specified within the request, which data manipulation may be inserted, for example, prior to pre-specified data manipulations (e.g., not specified within the request). In other instances, the request may exclude reference to any data manipulation.

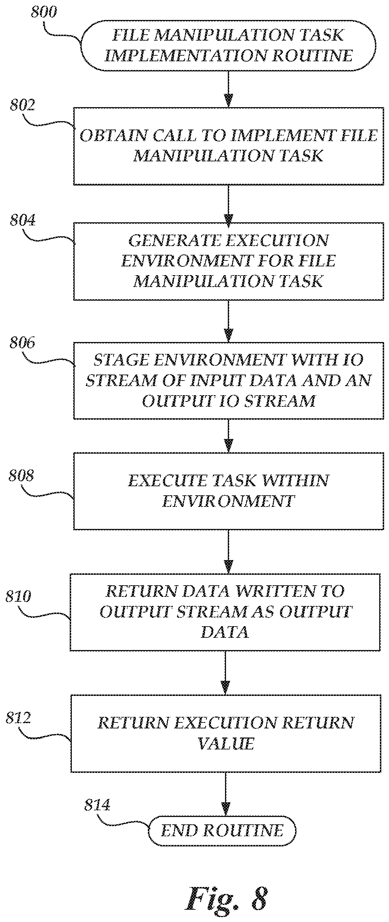

At block 706, the frontend 162 passes input data of the I/O request to an initial data manipulation for the I/O path. The initial data manipulation may include, for example, a native manipulation of the object storage service 160 or a serverless task defined by an owner of the object or collection referenced in the call. Illustratively, where the initial data manipulation is a native manipulation, the frontend 162 may pass the input to the object manipulation engine 170 of FIG. 1. Where the initial data manipulation is a serverless task, the frontend 162 can pass the input to the on-demand code execution system 120 of FIG. 1 for processing via an execution of the task. An illustrative routine for implementing a serverless task is described below with reference to FIG. 8.

While FIG. 7 illustratively describes data manipulations, in some instances other processing may be applied to an I/O path by an owner. For example, an owner may insert into an I/O path for an object or collection a serverless task that provides authentication independent of data manipulation. Accordingly, in some embodiments block 706 may be modified such that other data, such as metadata regarding a request or an object specified in the request, is passed to an authentication function or other path manipulation.

Thereafter, the routine 700 proceeds to block 708, where the implementation of the routine 700 varies according to whether additional data manipulations have been associated with the I/O path. If so, the routine 700 proceeds to block 710, where an output of a prior manipulation is passed to a next manipulation associated with the I/O path (e.g., a subsequent stage of a pipeline).

Subsequent to block 710, the routine 700 then returns to block 708, until no additional manipulations exist to be implemented. The routine 700 then proceeds to block 712, where the frontend 162 applies the called I/O method (e.g., GET, PUT, POST, LIST, DELETE, etc.) to the output of the prior manipulation. For example, the frontend 162 may provide the output as a result of a GET or LIST request, or may store the output as a new object as a result of a PUT or POST request. The frontend 162 may further provide a response to the request to a requesting device, such as an indication of success of the routine 700 (or, in cases of failure, failure of the routine). In one embodiment, the response may be determined by a return value provided by a data manipulation implemented at blocks 706 or 710 (e.g., the final manipulation implemented before error or success). For example, a manipulation that indicates an error (e.g., lack of authorization) may specify an HTTP code indicating that error, while a manipulation that proceeds successfully may instruct the frontend 162 to return an HTTP code indicating success, or may instruct the frontend 162 to return a code otherwise associated with application of the I/O method (e.g., in the absence of data manipulations). The routine 700 thereafter ends at block 714.

Notably, application of the called method to that output, as opposed to input specified in an initial request, may alter data stored in or retrieved from the object storage service 160. For example, data stored on the service 160as an object may differ from the data submitted within a request to store such data. Similarly, data retrieved from the system as an object may not match the object as stored on the system. Accordingly, implementation of routine 700 enables an owner of data objects to assert greater control over I/O to an object or collection stored on the object storage service 160 on behalf of the owner.

In some instances, additional or alternative blocks may be included within the routine 700, or implementation of such blocks may include additional or alternative operations. For example, as discussed above, in addition to or as an alternative to providing output data, serverless task executions may provide a return value. In some instances, this return value may instruct a frontend 162 as to further actions to take in implementing the manipulation. For example, an error return value may instruct the frontend 162 to halt implementation of manipulations, and provide a specified error value (e.g., an HTTP error code) to a requesting device. Another return value may instruct the frontend 162 to implement an additional serverless task or manipulation. Thus, the routine 700 may in some cases be modified to include, subsequent to blocks 706 and 710 for example, handling of the return value of a prior manipulation (or block 708 may be modified to include handling of such a value). Thus, the routine 700 is intended to be illustrative in nature.

With reference to FIG. 8, an illustrative routine 800 will be described for executing a task on the on-demand code execution system of FIG. 1 to enable data manipulations during implementation of an owner-defined function. The routine 800 is illustratively implemented by the on-demand code execution system 120 of FIG. 1.

The routine 800 begins at block 802, where the system 120 obtains a call to implement a stream manipulation task (e.g., a task that manipulations data provided as an input IO stream handle). The call may be obtained, for example, in conjunction with blocks 706 or 710 of the routine 700 of FIG. 7. The call may include input data for the task, as well as other metadata, such as metadata of a request that preceded the call, metadata of an object referenced within the call, or the like.

At block 804, the system 120 generates an execution environment for the task. Generation of an environment may include, for example, generation of a container or virtual machine instance in which the task may execute and provisioning of the environment with code of the task, as well as any dependencies of the code (e.g., runtimes, libraries, etc.). In one embodiment, the environment is generated with network permissions corresponding to permissions specified for the task. As discussed above, such permissions may be restrictively (as opposed to permissively) set, according to a whitelist for example. As such, absent specification of permissions by an owner of an I/O path, the environment may lack network access. Because the task operates to manipulate streams, rather than network data, this restrictive model can increase security without detrimental effect on functionality. In some embodiments, the environment may be generated at a logical network location providing access to otherwise restricted network resources. For example, the environment may be generated within a virtual private local area network (e.g., a virtual private cloud environment) associated with a calling device.

At block 806, the system 120 stages the environment with an IO stream representing to input data. Illustratively, the system 120 may configure the environment with a file system that includes the input data, and pass to the task code a handle enabling access of the input data as a file stream. For example, the system 120 may configure the environment with a network file system, providing network-based access to the input data (e.g., as stored on the object storage system). In another example, the system 120 may configure the environment with a "local" file system (e.g., from the point of view of an operating system providing the file system), and copy the input data to the local file system. The local file system may, for example, be a filesystem in user space (FUSE). In some instances, the local file system may be implemented on a virtualized disk drive, provided by the host device of the environment or by a network-based device (e.g., as a network-accessible block storage device). In other embodiments, the system 120 may provide the 10 stream by "piping" the input data to the execution environment, by writing the input data to a network socket of the environment (which may not provide access to an external network), etc. The system 120 further configures the environment with stream-level access to an output stream, such as by creating a file on the file system for the output data, enabling an execution of the task to create such a file, piping a handle of the environment (e.g., stdout) to a location on another VM instance colocated with the environment or a hypervisor of the environment, etc..

At block 808, the task is executed within the environment. Execution of the task may include executing code of the task, and passing to the execution handles or handles of the input stream and output stream. For example, the system 120 may pass to the execution a handle for the input data, as stored on the file system, as a "stdin" variable. The system may further pass to the execution a handle for the output data stream, e.g., as a "stdout" variable. In addition, the system 120 may pass other information, such as metadata of the request or an object or collection specified within the request, as parameters to the execution. The code of the task may thus execute to conduct stream manipulations on the input data according to functions of the code, and to write an output of the execution to the output stream using OS-level stream operations.

The routine 800 then proceeds to block 810, where the system 120 returns data written to the output stream as output data of the task (e.g., to the frontend 162 of the object storage system). In one embodiment, block 810 may occur subsequent to the execution of the task completing, and as such, the system 120 may return the data written as the complete output data of the task. In other instances, block 810 may occur during execution of the task. For example, the system 120 may detect new data written to the output stream and return that data immediately, without awaiting execution of the task. Illustratively, where the output stream is written to an output file, the system 120 may delete data of the output file after writing, such that sending of new data immediately obviates a need for the file system to maintain sufficient storage to store all output data of the task execution. Still further, in some embodiments, block 810 may occur on detecting a close of the output stream handle describing the output stream.

In addition, at block 812, subsequent to the execution completing, the system 120 returns a return value provided by the execution (e.g., to the frontend 162 of the object storage system). The return value may specify an outcome of the execution, such as success or failure. In some instances, the return value may specify a next action to be undertaken, such as implementation an additional data manipulation. Moreover, the return value may specify data to be provided to a calling device requesting an I/O operation on a data object, such as an HTTP code to be returned. As discussed above, the frontend 162 may obtain such return value and undertake appropriate action, such as returning an error or HTTP code to a calling device, implementing an additional data manipulation, performing an I/O operation on output data, etc. In some instances, a return value may be explicitly specified within code of the task. In other instances, such as where no return value is specified within the code, a default return value may be returned (e.g., a '1' indicating success). The routine 800 then ends at block 814.

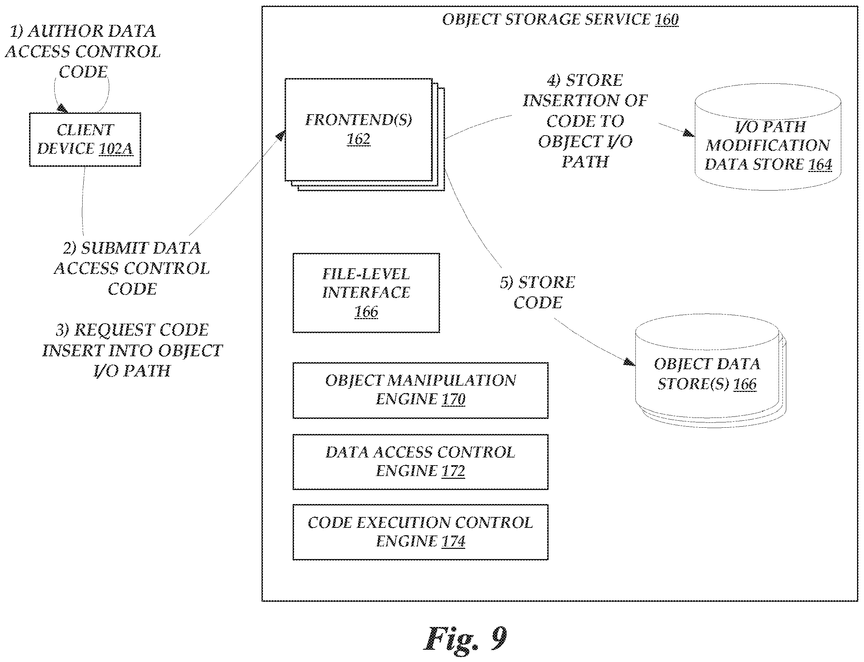

With reference to FIG. 9, illustrative interactions are depicted for enabling a client device 102A to modify an I/O path for one or more objects on an object storage service 160 by inserting data access control code (or function) into the I/O path, where the data access control code is executable on the on-demand code execution system 120.

The interactions of FIG. 9 begin at (1), where the client device 102A authors the data access control code (or function). As described herein, the data access control code may be a set of computer-executable instructions written or provided by the owner of the requested data object to provide customized access to the data object. The data access control code may be similar to other user codes described in the present disclosure (e.g., with reference to FIG. 1). The data access control code can process an incoming request to access a data object stored on the service 160 (i.e., "data request"), determine metadata associated with the data request (i.e., "request metadata"), identify metadata associated with the requested data object (i.e., "data metadata"), and determine whether the user submitting the data request (i.e., "requesting user") should be granted access to the requested data object, and if so, to which portions of the data object the requesting user should be given access.

For example, the data access control code may determine, based on the identity of the requesting user (e.g., indicated by the incoming data request), that the requesting user does not have access to the requested data object and deny the data request. Alternatively, the data access control code may determine, based on the identity of the requesting user, that the requesting user does have access to the requested data object and return the requested data object to the requesting user. In some cases, the data access control code contains the information needed to make the decision to grant or deny access. In other cases, the data access control code retrieves such information at an external database (e.g., with or without the data owner/provider's credentials) and makes the decision based on the retrieved information. For example, the data access control code may access a user access table indicating, for each respective user of a plurality of users of the object storage service (or those associated with or identified by the owner of the data object), one or more portions of the data object accessible by the respective user. As noted above, the data access control code may be authored in a variety of programming languages. Authoring tools for such languages are known in the art and thus will not be described herein. While authoring of the data access control code is described in FIG. 9 as occurring on the client device 102A, the service 160 may in some instances provide interfaces (e.g., web GUIs) through which to author or select the data access control code.

At (2), the client device 102A submits the data access control code to the frontend 162 of the service 160, and at (3), requests that an execution of the data access control code be inserted into an I/O path for one or more data objects stored by the service 160. Illustratively, the frontend 162 may provide one or more interfaces to the client device 102A enabling submission of the data access control code (e.g., as a compressed file). The frontend 162 may further provide interfaces enabling designation of one or more I/O paths to which an execution of the data access control code should be applied. Each I/O path may correspond, for example, to an object or collection of objects (e.g., a "bucket" of objects). In some instances, an I/O path may further correspond to a given way of accessing such object or collection (e.g., a URI through which the object is accessed), to one or more accounts attempting to access the object or collection (e.g., the user account of a requesting user who has submitted the request to access the object or collection), or to other path criteria. For example, in some cases, the data access control code may be inserted into only some of the I/O paths. In other cases, the data access control code is inserted into all of the I/O paths. For example, an authorization check different from that performed by the data access control code may be performed outside the I/O paths (e.g., for requests that do not relate to the I/O paths), and the data access control code may be executed in response to receiving a request for one of the I/O paths (e.g., in addition to the authorization check or instead of the authorization check). As another example, the indication to execute the data access control code stored by the service 160 may indicate that the data access control code is to be executed as part of an authorization path and may not contain a reference to any specific I/O path. In yet other cases, different data access control codes are inserted into different I/O paths (e.g., a default data access control code is inserted into some of the I/O paths, and a stricter data access control code is inserted into the other I/O paths). Designation of the I/O path modification (e.g., from a default I/O path that does not include execution of any owner-submitted code to a modified I/O path that includes the execution of the data access control code) is then stored in the I/O path modification data store 164, at (4). Additionally, the data access control code is stored within the object data stores 166 at (5). Although the example of FIG. 9 illustrates the data access control code being stored in the object data store 166 in response to a request to insert the data access control code into the I/O path, in other embodiments, the data access control code may have been previously stored in either the object data store 166 or another storage device in communication with the object storage service 160 or the on-demand code execution system 120, and the data access control code may be identified by its identifier in the request sent to the object storage service 160 at (2)/(3).

As such, when a data request is received via the specified I/O path that was modified at (4), the service 160 executes the data access control code against the data request and the input data for the data request (e.g., data provided by the client device 102A or an object of the service 160, depending on the nature of the I/O request). The data access control code then determines, based on the data request (or metadata thereof) and the input data, whether the data request should be granted as is, granted with modification, or denied. For example, based on determining that the data request should be granted as is, the data access control code may cause the requested data object to be returned to the requesting user. As another example, based on determining that the data request should be granted with modification, the data access control code may cause a modified version of the requested data object to be returned to the requesting user (e.g., by first performing data removal, data redaction, or data aggregation on the data object, and returning the result of the data removal, data redaction, or data aggregation to the requesting user). As yet another example, based on determining that the data request should be denied, the data access control code may return an error message to the requesting user (e.g., indicating that the requesting user does not have permission to access the requested data object). In this manner, a client device 102A (which in FIG. 9 illustratively represents the computing device of an owner or provider of the requested data object or object collection) can obtain greater control over data stored on and retrieved from the object storage service 160.

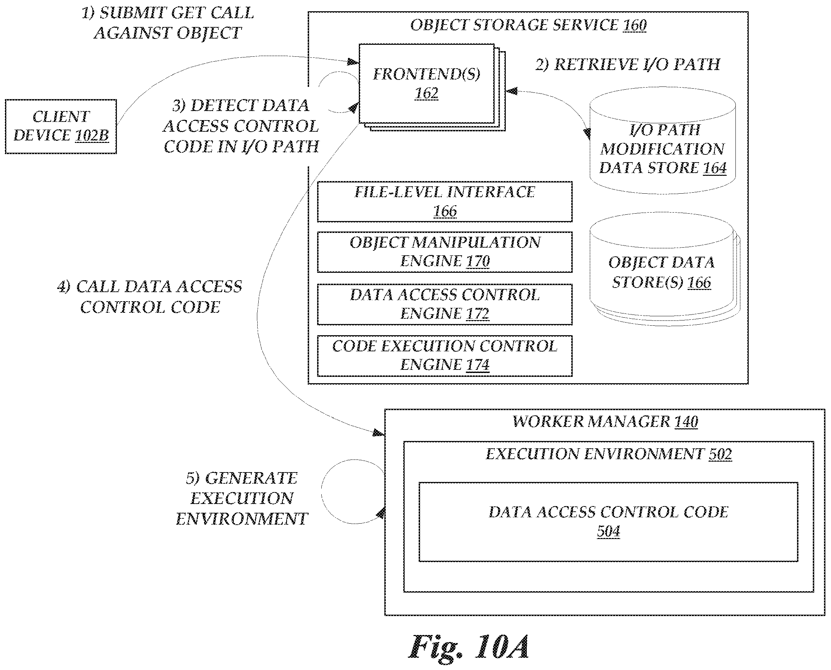

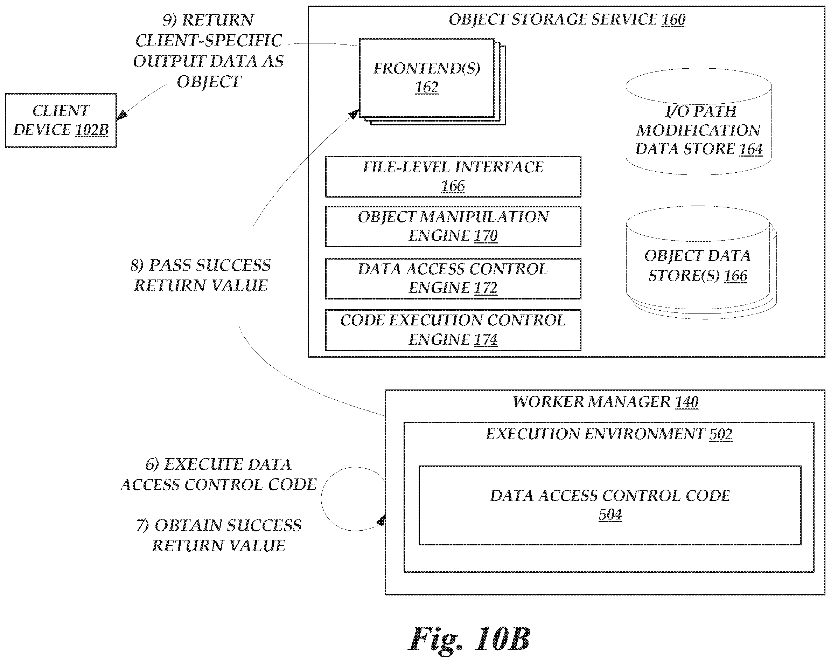

With reference to FIGS. 10A and 10B, illustrative interactions will be discussed for processing a data request received by the service 160 via an I/O path that has been modified to include execution of a data access control code, using a "GET" call as an example. While shown in two figures, numbering of interactions is maintained across FIGS. 10A and 10B.

The interactions begin at (1), where a client device 102B (e.g., a client device of a requesting user different from the client device 102A of FIG. 9 used by the data owner/provider) submits a GET call to the object storage service 160, which corresponds to a request to obtain data of an object (identified within the call) stored on the service 160. As shown in FIG. 10A, the call is directed to a frontend 162 of the service 160 that, at (2), retrieves from the I/O path modification data store 164 an indication of modifications to the I/O path for the call. For example, in FIG. 10A, the I/O path used can correspond to the use of a GET request method directed to a particular URI (e.g., associated with the frontend 1(2) to retrieve an object in a particular logical location on the service 160 (e.g., a specific data bucket). In FIGS. 10A and 10B, it is assumed that an owner of that logical location has previously specified a modification to the I/O path (e.g., as illustrated in FIG. 9), and specifically, has specified that a data access control code submitted or selected by the owner should be executed (e.g., on the service 160 or on the on-demand code execution system 120) to determine the level of access associated with the requesting user and to process the data request according to the determined level of access. In some embodiments, the GET call specifies one or more additional data manipulation codes that need to be executed on the output data before the output data is returned to the client device 102B. Upon detecting such additional data manipulation codes, the frontend 162 cause the additional data manipulation codes to be executed on the on-demand code execution system 120 on top of the user codes already configured (e.g., before the GET call is received from the client device 102B) to be executed in connection with the requested I/O path. The one or more additional data manipulation codes may belong to the owner or provider of the requested data object, to the user submitting the GET call, to a third party other than the data owner/provider or the user, or any combination thereof.

Accordingly, at (3), the frontend 162 determines that the modification data retrieved from the I/O path modification data store 164 includes an execution of the data access control code. As described herein, the data access control code may be a set of computer-executable instructions written or provided by the owner of the requested data object to provide customized access to the data object. The data access control code may be similar to other user codes described in the present disclosure (e.g., with reference to FIG. 1). In some cases, the data access control code is the only owner-submitted code in the I/O path, and the data access control code returns a value indicative of whether the requesting user is allowed to access the requested data object (or in cases where more than two levels of access exist, the specific level of access associated with the requesting user with respect to the requested data object) without performing additional tasks on the requested data object such as manipulating the requested data object in some way (e.g., filter, redact, process, aggregate, encrypt, summarize, or obfuscate the requested data object). In other cases, such a data access control code is present in the I/O path along with one or more other owner-submitted codes that are each configured to accomplish a different task (e.g., a task other than data access control, such as data modification, analytics data generation, data access log generation, etc.). By having the data access control code focus solely on the data access decision and not on other data manipulation tasks, the data access control code can be executed in a much more light-weight manner, which may speed up the processing of the data access decision and may allow more efficient re-use of the outcome of the data access decision (e.g., by caching the data access decision or sending the data access decision to multiple data manipulation tasks in parallel). In yet other cases, the data access control code present in the I/O path determines whether the requesting user is allowed to access the requested data object (or in cases where more than two levels of access exist, the specific level of access associated with the requesting user with respect to the requested data object), and based on the determination, performs one or more additional data manipulation tasks corresponding to the determined level of access (e.g., as illustrated in FIGS. 6A and 6B). Thus, at (4), the frontend 162 submits a call to the on-demand code execution system 120 to execute the data access control code specified within the modification data. For example, a code execution request may be generated and transmitted to the on-demand code execution system 120, where the code execution request includes (or identifies) the data access control code along with any information to be used by the data access control code to determine whether and how the requesting user should be given access to the requested data object. Such information may include the identity of the requesting user, identity of the requested data object, content of the requested data object, timestamp associated with the data request, identity of the owner of the requested data object, or any other data or metadata associated with the data request or the requested data object. The on-demand code execution system 120, at (5), therefore generates an execution environment 502 in which to execute the data access control code (e.g., indicated by the code execution request received by the on-demand code execution system 120. For example, the code execution request may be sent to a frontend 130 of the system 120, which may distribute instructions to a worker manager 140 of the system 120 to select or generate a VM instance 150 in which to execute the data access control code, in which case the VM instance 150 would represent the execution environment 502 illustrated in FIG. 10A. During generation of the execution environment 502, the system 120 further provisions the execution environment 502 with the data access control code 504 indicated by the I/O path modification data. The data access control code 504 may be retrieved, for example, from the object data stores 166. While not shown in FIG. 10A, the execution environment 502 further includes other dependencies of the data access control code 504, such as access to an operating system, a runtime required to execute the data access control code 504, etc.

The interactions of FIG. 10A are continued in FIG. 10B, where the on-demand code execution system 120 executes the data access control code 504 at (6). As the data access control code 504 may be user-authored (e.g., authored by the owner of the requested data object), any number of functionalities may be implemented within the data access control code 504. However, for the purposes of description of FIGS. 10A and 10B, it will be assumed that the data access control code 504, when executed, determine data or metadata associated with the data request, determine data or metadata associated with the requested data object, and determine whether the user submitting the data request (i.e., "requesting user") should be granted access to the requested data object. Additionally, the data access control code 504 may, when executed, determine which portions of the requested data object should be returned to the requesting user. Although not illustrated in FIGS. 10A and 10B , in some embodiments, the execution environment 502 includes the file descriptors 506 and 508 described above with reference to FIGS. 6A and 6B, and the data access control code 504, when executed, writes output data to the output file (e.g., indicated by the output file descriptor 508) using the input data (e.g., indicated by the input file descriptor 506) such that the output data is commensurate with the requesting user's level of access. For example, based on the requesting user having full access to the requested data object, the entire data object may be written to the output file. As another example, based on the requesting user having access to only a subset of the requested data object, the subset of the requested data object may be written to the output file. As yet another example, based on the requesting user having access to only a modified version of the requested data object (e.g., an encrypted version that does not include the underlying data object in its unencrypted form, an aggregated version that does not include the underlying data object in its raw form, etc.), the modified version of the requested data object may be written to the output file. Alternatively, in some embodiments, the execution of the data access control code 504 returns an indication of the requesting user's level of access, and the service 160 (or another code execution) handles the reading from or writing to such file descriptors to return the requested data object (or a modified version thereof) to the requesting user.

Accordingly, at (7), the system 120 obtains a return value of the execution of the data access control code 504 (e.g., a value passed in a final call of the function within the data access control code 504). For the purposes of description of FIGS. 10A and 10B, it will be assumed that the return value indicates that the data access control code 504 was successfully executed. At (8), the success return value is then passed to the frontend 162. The success return value may be indicative of whether the requesting user is allowed to access the requested data object (or in cases where more than two levels of access exist, the specific level of access associated with the requesting user with respect to the requested data object). This value may be cached or provided to other processes or tasks for re-use. For example, if the value indicates that User A is allowed to access Data Object X, the value can be cached, and when the service 160 receives another request to access Data Object X (or another data object associated with the same access level as Data Object X) from User A (or another user whose access level is configured to be the same as User A's access level or more inclusive than User A's access level), the service 160 can return the requested data object based on the cached value without having to execute the data access control code. Additionally, such re-use of the data access decision can also provide a defense against a malicious requestor trying to overload the service 160 or the on-demand code execution system 120 with a large number of data requests. The cached value can be specific to requesting users (e.g., data requests from Users A and B may see and re-use the cached value, but data requests from User C may not), requested data object (e.g., data requests for Data Objects X and Y may see and re-use the cached value, but data requests for Data Object Z may not), level of access (e.g., data requests for a data object having Security Level S1 may see and re-use the cached value, but data requests for a data object having Security Level S2 may not), geographical regions (e.g., data requests associated with Data Center A may see and re-use the cached value, but data requests associated with Data Center B may not), and any combination thereof.

On receiving the return value, the frontend 162 generates client-specific output data based on the return value and returns the client-specific output data as the requested data object at (9). For example, based on the return value indicating that the requesting user has full access to the requested data object, the entire data object may be included in the client-specific output data. As another example, based on the return value indicating that the requesting user has access to only a subset of the requested data object, the subset of the requested data object may be included in the client-specific output data. As yet another example, based on the return value indicating that the requesting user has access to only a modified version of the requested data object (e.g., an encrypted version that does not include the underlying data object in its unencrypted form, an aggregated version that does not include the underlying data object in its raw form, etc.), the modified version of the requested data object may be included in the client-specific output data. Interaction (9) thus illustratively corresponds to an implementation of the GET request method, initially called for by the client device 102B, albeit by returning output data that may differ from the actual data object specified within the call. From the perspective of the client device 102B, a call to GET a data object from the object storage service 160 therefore results in return of data to the client device 102B as the object. However, rather than returning the data object as stored on the service 160, the data provided to the client device 102B corresponds to client-specific output data generated based at least in part on the execution of the data access control code 504, thus enabling the owner of the data object greater control over the data returned to the client device 102B. Other details of FIGS. 10A-10B may be identical or similar to those described above with reference to FIGS. 6A-6B.

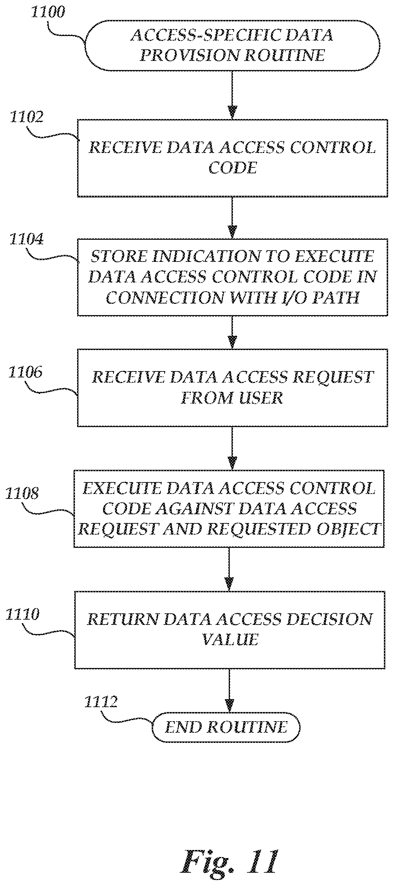

With reference to FIG. 11, an illustrative routine 1100 will be described for executing an owner-submitted (or owner-specified) data access control code on the on-demand code execution system 120 of FIG. 1 to enable user-specific (e.g., specific to the requesting user), access-level-specific (e.g., specific to the level of access associated with the requesting user) data provision in response to an I/O request to the object storage service 160. The routine 1100 is illustratively implemented by the object storage service 160 of FIG. 1. Although some embodiments of the present disclosure are described with reference to owner-submitted codes, such embodiments may also be extended to include owner-specified codes (e.g., specification of one or more codes provided by the service 160 or another user of the service 160).

The routine 1 100 begins at block 1102, where the service 160 receives data access control code, for example, from the client device 102A shown in FIG. 9. The data access control code may be a custom control code generated or selected by the owner of a data object stored on the service 160. The service 160 may provide one or more APIs for registering or selecting custom control code that can be inserted into the I/O paths. In some embodiments, an actual copy of the data access control code is received from the client device 102A. In other embodiments, instead of receiving an actual copy of the data access control code from the client device 102A, the service 160 receives an identifier associated with the data access control code from the client device 102A, where the identifier can be used to identify or retrieve an actual copy of the data access control code from within the service 160 or in another storage device accessible by the service 160. In yet other embodiments, the service 160 receives an identifier associated with the data access control code from the client device 102A, and the identifier is used to cause execution of the data access control code (e.g., on the on-demand code execution system 120) but the service 160 does not retrieve or store an actual copy of the data access control code.

At block 1104, the service 160 stores the data access control code into one or more I/O paths (e.g., by storing an indication that the data access control code is associated with the one or more I/O paths). As discussed above, once the data access control code is stored into an I/O path, the service 106, upon receiving a call to the I/O path, causes the data access control code to be executed.

At block 1106, the service 160 receives a data request from a requesting user, where the data request indicates the data object that the requesting user wishes to access and the identity of the requesting user providing the data request. In some embodiments, each user may be assigned a different portal via which the user can access the data objects in the object storage service 160. For example, the portal may be a unique network path into the buckets, folders, volumes, etc. of data stored by the object storage service 160. Each portal may be associated with one or more authorized users and indicate which owner-submitted code(s) or series of owner-submitted code(s) is placed in the I/O path for which operations through the portal (e.g., GET, PUT, LIST, etc.). For example, for Portal A to a data object, authorized users may include User A and User B, and the owner-submitted code(s) placed in a GET path to the data object may include a data access control code that checks whether the requesting authorized user is permitted to access the requested data object and a data processing code that converts the data object into another format having a smaller file size. Yet further for Portal A, the owner-submitted code(s) placed in a PUT path to the data object may include a virus scanning code that checks for malware before writing the requested data to the data object. Any other combinations of authorized users, I/O operations, and code placement can be implemented using the techniques described herein. In some embodiments, each portal is assigned a different identifier (e.g., DNS name), and the service 160 uses the identifier identify the specific portal via which a given data object is requested.

At block 1108, the service 160 executes the data access control code using the data request (or metadata thereof), the requested data object (or metadata thereof), or both. The data access control code can access the metadata associated with the data request and the metadata associated the requested data object, and grant or deny the data request (or take additional steps before doing so such as perform data manipulations) based on the accessed metadata. For example, the data access control code may look up the requesting user in a permissions table to determine whether the requesting user has permission to access the requested data object. As another example, the data access control code may determine whether the requesting user has the required security clearance by accessing a government clearance database, determine whether the data request includes any prohibited keywords, and determine whether the timestamp on the requested data object is within the time window by accessing the metadata associated with the requested data object as well as accessing a subscriptions database indicating the subscription time window for the requesting user (e.g., allowed to access documents less than 1 month old, allowed to access images more than 5 years old, allowed to write to or modify data less than 1 week old, and so on). Based on these determinations, the data access control code can determine whether the requesting user is allowed to access the requested data object.

As another example, the data access control code can determine that the requested data object is 35 days old (e.g., by accessing the metadata associated with the requested data object), and that the user requesting access to the data object has access to all data objects older than 30 days (e.g., by looking up the identity of the requesting user indicated in the data request in a data access table), and based in turn on that determination, grant access to the requested data object. As another example, User A may be given a 30-day window to access any data stored by the service 160 (and owned by the data owner), and User B may be given archival access to data that more than 1 year old. Upon receiving a request for a data object from User A, the data access control code placed in the I/O path to the data object can be executed, and the data access control code can deny User A's request based on the requested data object being 3 months old. Similarly, upon receiving a request for a data object from User B, the data access control code placed in the I/O path to the data object can be executed, and the data access control code can deny User B's request based on the requested data object being 3 months old. As another example, the data access control code may determine that User A only has access to a portion of the requested data object (e.g., a portion that relates to specific keywords such as "legal" or "automobiles"), and return only the portion of the requested data object to the requesting user (e.g., all data tagged with keywords "legal" and "automobiles"). As another example, the data access control code may access a user access table and determine, based on the user access table, that User A has access to all columns of the requested data object and return all of the columns in the data object. As another example, the data access control code may access the user access table and determine, based on the user access table, that User B has access to only the first three columns of the five columns included in the data object and return the first three columns of the data object.

Although granting or denying access based on a time window is described as an example, the decision to grant or deny access can be made on any other criteria such as prior access by the requesting user (e.g., where the user can only access the data 3 times, and after the user has accessed the data three times, subsequent requests for the data by the same user would be denied), keywords (e.g., where the user can only access data relating to the keyword "books", and the user's request would be granted only if the request is limited to data relating to the keyword "books"), geographic region associated with the requesting user (e.g., where only users from the U.S. can access the data and a request provided by a user outside the U.S. would be denied), account status of the user (e.g., where only premium or VIP users can access the data, and a request provided by a user who does not have a premium or VIP account would be denied), a security level associated with the requested data object (e.g., where the requesting user is allowed to access data objects that are associated with Security Level 3, 4, or 5 but not allowed to access data objects that are associated with Security Level 1 or 2), content of the requested data object (e.g., where the requesting user is not allowed to access data objects that contain the word "confidential"), and the like. Although not illustrated in FIG. 11, the service 160 may cause a default data access control code to be executed in addition to or instead of a custom data access control code described above. In some embodiments, such a default data access control code is executed before the execution of the custom data access control code. In other embodiments, such a default data access control code is executed after the execution of the custom data access control code.

In some embodiments, the data access control code may provide different levels of access depending on the specific I/O request method called. For example, the data access control code may determine that the requesting user has permission to LIST the contents of a given bucket of data objects even though the requesting user does not have permission to GET the individual data objects in the given bucket. As another example, the data access control code may determine that the requesting user has permission to LIST the contents of a given bucket of data objects, and that while the requesting user does not have permission to GET the individual data objects in their raw format, the requesting user has permission to GET portions of the individual data objects or modified (e.g., redacted) versions of the individual data objects in the given bucket. In other embodiments, the data access control code provides the same level of access regardless of the specific I/O request method called. For example, the data access control code may determine that the requesting user has permission to LIST the contents of a bucket of data objects only if the requesting user also has permission to GET the individual data objects in the bucket. As another example, the data access control code may determine that the requesting user has permission to LIST the contents of a bucket of data objects only if the requesting user at least has permission to GET portions of the data objects or modified (e.g., redacted) versions of the data objects in the bucket. As another example, the data access control code may determine that the requesting user has permission to LIST only part of the contents in the bucket of data objects (e.g., Data Objects 1-4 of Data Objects 1-6 contained in the bucket), and that the requesting user has permission to GET a smaller subset of the data objects (e.g., Data Objects 1-3 of Data Objects 1-4 that the requesting user has permission to LIST).

The routine 1100 then proceeds to block 1110, where the service 160 returns a data access decision value, which indicates whether the requesting user is allowed to access the requested data object (or the level of access associated with the requesting user). Although not illustrated in FIG. 11, in some embodiments, the service 160 may return, based on the data access decision value, a version of the requested data object that is specific to the type of access associated with the requesting user. For example, based on the requesting user having full access to the requested data object as is, the service 160 returns the requested data object to the requesting user. Although not shown in FIG. 11, the same requesting user may request the same data object a week later, and the service 160 may determine that the requesting user no longer has access to the requested data object (e.g., due to a change in the requesting user's access rights, due to the requesting user's access to the data object having exceeded a threshold count allotted to the requesting user, due to the timestamp associated with the data object falling outside the time window during which the requesting user is allowed access the data object, etc.) and deny the subsequent data request. Alternatively, the requesting user may be provided different segments of the data object at different levels of granularity depending on the context in which the requesting user submits the data request. Thus, by allowing the owner of the data object to place the data access control code in the I/O paths for the data object, the owner can dynamically control access to the data object. Doing so may be particularly advantageous for object storage services having a large number of users whose permission settings change frequently. For example, a data owner/provider who utilizes an object storage service to provide data subscription services to his or her subscribes would find it burdensome to have to update the permission settings for the individual subscribers as new subscribers sign up, the existing subscribers change their subscription levels (e.g., basic access to premium access, or from paid access to free access), and the context in which the data requests are received from the individual subscribers change (e.g., the time at which the data requests are received, the count of prior access, keywords limiting the data requests, etc.). Instead, the techniques described herein allow such a data owner/provider to write a data access control code and place it in the I/O path, and have the data access control code dynamically determine, based on the changing access levels and context, whether to grant or deny the data requests. The routine 1100 then ends at block 1112.

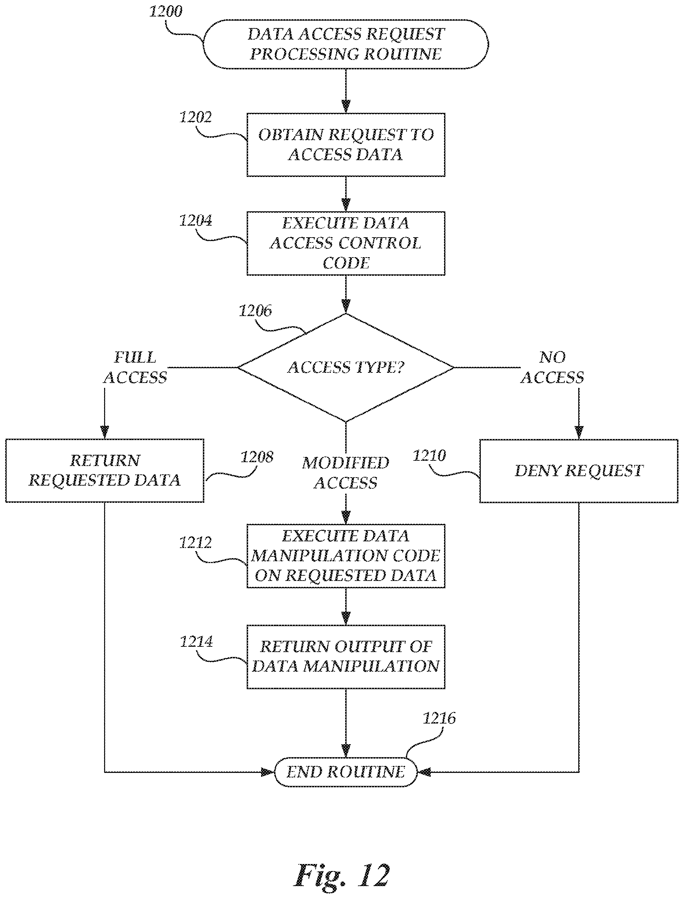

With reference to FIG. 12, an illustrative routine 1200 will be described for another embodiment of executing an owner-submitted (or owner-specified) data access control code in which additional data manipulation is performed based on the access level associated with the requesting user. The routine 1200 is illustratively implemented by the object storage service 160 of FIG. 1.

The routine 1200 begins at block 1202, where the service 160 obtains a request to access a data object stored by the service 160 from a requesting user, and at block 1204, the service 160 executes data access control code inserted into the I/O path associated with the request, in a manner similar to those described with reference to FIG. 11.

At block 1206, the service 160 determines the level of access associated with the requesting user. For example, the execution of the data access control code may provide an indication of the level of access associated with the requesting user. If the service 160 determines that the requesting user has full access to the requested data, the service 160, at block 1208, returns the requested data. If the service 160 determines that the requesting user does not have access to the requested data, the service 160, at block 1210, denies the request. Although the example of FIG. 12 illustrates three levels of access (e.g., full access, modified access, and no access), any other number of access levels can be utilized to provide access-level-specific execution of owner-submitted codes (e.g., to filter, redact, process, aggregate, encrypt, summarize, or obfuscate the requested data object).

If the service 160 determines that the requesting user has modified access (e.g., a level of access different from full access and no access), the service 160, at block 1212, causes one or more data manipulation task codes to be executed on the requested data. For example, the service 160 may generate a code execution request and transmit the code execution request to the on-demand code execution system 120 as illustrated FIGS. 10A-10B. The data manipulation task codes may be configured to (i) remove a portion of the data object (e.g., segments, columns, rows, pages, etc.), (ii) generate aggregated data by aggregating at least a portion of the data object such that the user-specific output includes the aggregated data that is not included in the data object itself and also does not include at least some data included in the original data object, or (iii) render a portion of the data object unintelligible by encryption or redaction of data. In some cases, the data manipulation is performed only upon determining that the data request does not satisfy one or more of a temporal restriction (e.g., the requesting user has a trial access that has expired, so only the first page of the documents are provided), geographical restriction (e.g., requests from outside the U.S. may be processed to reduce the file size of the requested image object), keyword restriction (e.g., presence or absence of a specific keyword may cause the returned data object to be encrypted), restriction on the number/amount of prior access (e.g., after the requesting user has used up his or her 1-time unlimited access to the data object, the subsequent requests for the data object result in a redacted version of the data object), or other criteria described with reference to FIG. 11. In other cases, the data manipulation is performed regardless of whether such restrictions/criteria are satisfied. Although not illustrated in FIG. 12, in some embodiments, the data returned to the requesting user is sent to the user in multiple stages. For example, in response to determining the requesting user's access level with respect to the requested data object at block 1206, the service 160 may send one or more HTTP headers to the requesting user (first stage) to indicate that a successful access request decision has been made (or that an authorization failure has occurred), and when the requested data object is ready to be sent to the requesting user (without data manipulation at block 1208, or with data manipulation at block 1214), the service 160 sends the requested data to the requesting user in one or more HTTP responses (second stage). In some embodiments, the service 160 sends the one or more HTTP headers to the requesting user before the execution of the additional data manipulation codes is initiated. In other embodiments, the service 160 sends the one or more HTTP headers to the requesting user after the execution of the additional data manipulation codes is initiated but before the execution is completed. In yet other embodiments, the service 160 sends the one or more HTTP headers to the requesting user after the execution of the additional data manipulation codes is completed. By promptly indicating to the requesting user whether the access grant decision has been made, the service 160 can prevent the requesting user from sending additional requests to try to gain access to the requested data object (e.g., based on the delay in response from the service 160), thereby eliminating or reducing the consumption of valuable processing and network resources of the service 160 on unnecessary requests.

At block 1214, the service 160 returns the output of the data manipulation to the requesting user. In some embodiments, the data manipulation performed on the requested data object is transparent to the requesting user such that the requesting user cannot determine whether the requested data object is returned with or without the data manipulation. In other embodiments, the requesting user can determine whether the requested data object is returned with or without the data manipulation (e.g., based on an indicator output along with the returned data or a message such as "here is a preview" or "for a full version, please subscribe here"). Although data access control code and data manipulation task code are described herein as examples, other types of user code can be utilized to further customize the service 160. For example, the data owner/provider may insert a tracking code in the PUT and GET paths that monitors the identity of the users uploading data to the service 160 and downloading data from the service 160 and generates analytics data (e.g., the number of times User A's publication was downloaded by other users, the number of files User B has downloaded, etc.) that can be stored within the service 160 or another external logging service. In some embodiments, a notification, credit, or reward may be provided to the users based on the analytics data (e.g., a credit may be provided to a user each time the user's data is accessed by another user, or a fee may be charged to a user each time the user accesses another user's data). Thus, by allowing the owner of the data object to place certain codes (e.g., owner-submitted codes) in the I/O paths for the data object, the owner can dynamically perform data manipulations to the data object and provide user-specific output data to the requesting users. Doing so may be particularly advantageous for object storage services having a large number of users who have different levels of access and different types of output (e.g., some users having access to the raw data, some users having access to only a preview version of the raw data, some users having access to only an aggregate version of the raw data, some users having access to only a subset of the raw data, etc.). For example, a data owner/provider who utilizes an object storage service to provide data subscription services to his or her subscribes would find it burdensome to have to configure the object storage service to provide subscriber-specific types of output to the individual subscribers and update the configuration as the individual subscribers' access levels change. Instead, the techniques described herein allow such a data owner/provider to write a data access control code and one or more data manipulation codes, and place the codes in the I/O path, and have the codes dynamically generate, based on the changing access levels and context, subscriber-specific versions of the requested data object (e.g., unmodified, redacted, filtered, encrypted, etc.) to be returned to the subscribers. The routine 1200 then ends at block 1216.

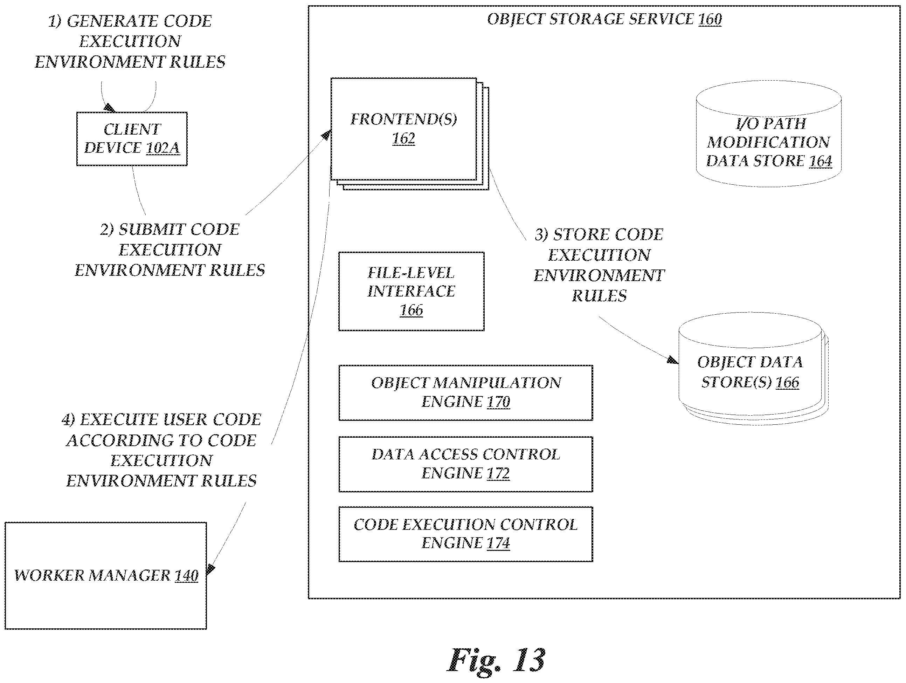

With reference to FIG. 13, illustrative interactions are depicted for enabling a client device 102A to specify code execution environment rules to control the code execution environment for the various functions executed on the on-demand code execution system 120 in response to an I/O request from a requesting user.

The interactions of FIG. 13 begin at (1), where the client device 102A generates code execution environment rules. The object storage service 160 may provide a user interface for specifying one or more code execution environment rules. For example, the code execution environment rules may be specified in connection with specific codes when the codes are provided or specified to the service 160 (e.g., by the author of the codes, by the owner of the codes, or by the requesting user). At (2), the client device 102A submits the code execution environment rules to the frontend 162 of the service 160, and the frontend 162 causes the code execution environment rules to be stored in the object data store 166, at (3).

At (4), the frontend 162 causes execution of one or more owner-submitted codes (e.g., data access control codes, data manipulation codes, etc.) on the on-demand code execution system 120 according to the code execution environment rules. For example, the worker manager 140 may acquire the compute capacity (e.g., virtual machine instances or containers created thereon) needed to execute such owner-submitted codes and configure the compute capacity according to the code execution environment rules such that the user code being executed using the compute capacity is given additional privileges (e.g., access to external services or the requesting user's private resources) or further restricted in some way (e.g., by disabling establishing network connections with external resources, limiting the amount of computing resources used by the code, limiting the amount of time spent on executing the code, etc.). In some embodiments, two or more templates of code execution environment rules may have been specified for a given code execution (e.g., by the author of the code, by the owner of the code, by the requesting user, or any combination thereof). In such embodiments, the templates may be applied according to a specific priority order (e.g., the order in which the template of rules are applied, and whether a template of rules is allowed to modify or override another template of rules). For example, a template of rules specified by the author of the code or the requesting user may not be allowed to modify or override the template of rules specified by the data owner/provider. As another example, the template of rules specified by the author is applied first, then the template of rules specified by the data owner/provider is applied so long as the template does not modify the template of rules specified by the author, and then the template of rules specified by the requesting user is applied so long as the template does not modify the template of rules specified by the author or the template of rules specified by the data owner/provider. Additionally, in some embodiments, the on-demand code execution system 120 can, as part of its operations in executing the one or more codes specified to the system 120, re-use the execution environment configured according to the rules specified at (2), or cache the results returned to the service 160.

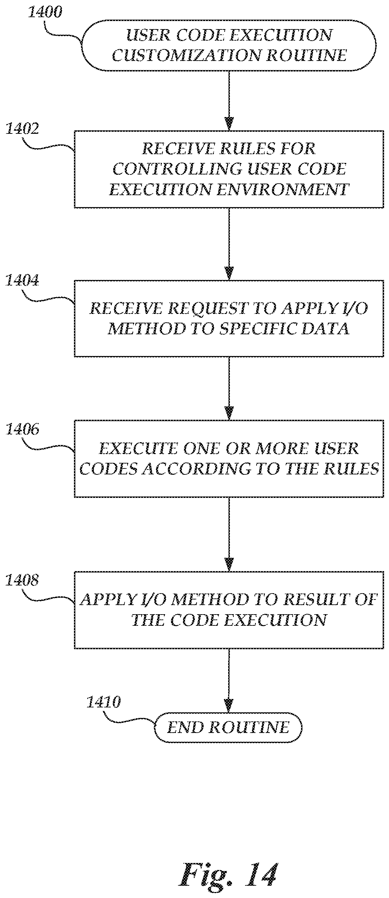

Additional details of how the code execution environment rules are used to control or modify the execution environment for the one or more owner-submitted functions are described in greater detail below with reference to FIG. 14.

With reference to FIG. 14, an illustrative routine 1400 will be described for customizing the execution environment for one or more code executions performed in response to an I/O request from a requesting user. The routine 1400 is illustratively implemented by the object storage service 160 of FIG. 1.

The routine 1400 begins at block 1402, where the service 160 receives code execution environment rules to control user code execution. For example, the service 160 may provide a user interface or an API for generating or selecting the code execution environment rules. The user interface or API may also allow the owner to generate or select different sets of code execution environment rules for different owner-submitted codes.

The code execution environment rules may specify one or more privileges or restrictions associated with one or more code executions to be performed in response to the I/O request from the requesting user. For example, the code execution environment rules may specify a time limit on a duration of the execution of the owner-defined code, a resource limit on an amount of computing resources used by the execution of the owner-defined code, or the amount of computing resources to be allocated to the virtual machine instance on which the owner-defined code is to be executed. In some cases, the code execution environment rules may specify one or more services that the code execution can access or the parameters or credentials (e.g., the data object owner's credentials or the requesting user's credentials) needed to access such services (e.g., logging service, database service, storage service, etc.). In other cases, the code execution environment rules may specify one or more services that the code execution cannot access (e.g., to prevent the code execution from establishing a connection to unsecure resources).

At block 1404, the service 160 receives a request to apply an I/O method (e.g., PUT, GET, LIST, etc.) to specific data stored by the service 160. In some cases, the code execution environment rules are received in the request to apply the I/O method. In other cases, the code execution environment rules are provided separately from this request.

At block 1406, the service 160 causes one or more user codes (e.g., owner-submitted codes such as data access control code, data manipulation code, analytics data generation code, etc.) that have been inserted into the I/O path associated with the request to be executed according to the code execution environment rules. For example, the code execution may, based on the code execution environment rules, access an external logging service and store analytics data associated with the code execution to the logging service. As another example, the code execution may, based on the code execution environment rules, access an external permissions database and determine whether the requesting user has access to the requested data object. As yet another example, the code execution may, based on the code execution environment rules, refrain from accessing any external resources. At block 1408, the service 160 applies the requested I/O method to the result of the code execution. The routine 1400 then ends at block 1410.

### Other Considerations

All of the methods and processes described above may be embodied in, and fully automated via, software code modules executed by one or more computers or processors. The code modules may be stored in any type of non-transitory computer-readable medium or other computer storage device. Some or all of the methods may alternatively be embodied in specialized computer hardware.

Conditional language such as, among others, "can," "could," "might" or "may," unless specifically stated otherwise, are otherwise understood within the context as used in general to present that certain embodiments include, while other embodiments do not include, certain features, elements or steps. Thus, such conditional language is not generally intended to imply that features, elements or steps are in any way required for one or more embodiments or that one or more embodiments necessarily include logic for deciding, with or without user input or prompting, whether these features, elements or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, or Z). Thus, such disjunctive language is not generally intended to, and should not, imply that certain embodiments require at least one of X, at least one of Y or at least one of Z to each be present.

Unless otherwise explicitly stated, articles such as 'a' or 'an' should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

The term "or" should generally be understood to be inclusive, rather than exclusive. Accordingly, a set containing "a, b, or c" should be construed to encompass a set including a combination of a, b, and c.

Any routine descriptions, elements or blocks in the flow diagrams described herein or depicted in the attached figures should be understood as potentially representing modules, segments, or portions of code which include one or more executable instructions for implementing specific logical functions or elements in the routine.

## Claims

1. A computer-implemented method, comprising:
storing a data object and an indication to execute an owner-defined data access control code in connection with one or more input/output operations associated with the data object;
obtaining from a client device (102A) a data request to retrieve the data object, wherein the data request indicates the data object and a requesting user associated with the data request;
executing the data access control code based at least on one or both of data associated with the data request and data associated with the data object;
executing, based at least on an output of the execution of the data access control code, data manipulation code against the data object, wherein executing the data manipulation code comprises applying a user-specific modification, user-specific filtering, or user-specific processing to produce a user-specific output; and
returning to the client device (102A) the user-specific output of the execution of the data manipulation code as the data object.

2. The computer-implemented method of claim 1, wherein executing the data manipulation code comprises removing a portion of the data object, and generating the user-specific output that does not include the removed portion of the object.

3. The computer-implemented method of claim 1, wherein executing the data manipulation code comprises generating aggregated data by aggregating at least a portion of the data object, and generating the user-specific output that (i) includes the aggregated data that is not included in the data object and (ii) does not include at least some data included in the data object.

4. The computer-implemented method of claim 1, wherein executing the data manipulation code comprises rendering a portion of the data object unintelligible; and generating the user-specific output that includes the portion of the data object rendered unintelligible.

5. The computer-implemented method of claim 1, wherein executing the data access control code comprises determining that the data request does not satisfy a temporal restriction placed on the requesting user's access to the data object, and wherein executing the data manipulation code comprises generating the user-specific output that is different from the data object by removing, redacting, filtering, aggregating, obfuscating, encrypting, or processing at least a portion of the data object.

6. The computer-implemented method of claim 1, wherein executing the data access control code comprises determining that the data request does not satisfy a geographical restriction placed on the requesting user's access to the data object, and wherein executing the data manipulation code comprises generating the user-specific output that is different from the data object by removing, redacting, filtering, aggregating, obfuscating, encrypting, or processing at least a portion of the data object.

7. The computer-implemented method of claim 1, wherein executing the data access control code comprises determining that the requesting user has accessed the data object more than a threshold number of times, and wherein executing the data manipulation code comprises generating the user-specific output that is different from the data object by removing, redacting, filtering, aggregating, obfuscating, encrypting, or processing at least a portion of the data object.

8. A system for providing customized data manipulation of a data object stored on an object storage service (160), the system comprising:
one or more data stores (166) including:
the data object; and
information designating a modification to input/output operations to include execution of owner-defined data access control code prior to providing responses to requests to perform the input/output operations;
one or more processors configured with computer-executable instructions to:
obtain from a client device (102A) a data request to retrieve the data object, wherein the data request indicates the data object and a requesting user associated with the data request;
execute the data access control code based at least on metadata associated with one or both of the data request and the data object;
obtain, from the execution of the data access control code, an indication that the requesting user is allowed to access the data object;
generate, based at least on the indication obtained from the execution of the data access control code, user-specific output data, wherein generating the user-specific output data comprises applying a user-specific modification, user-specific filtering, or user-specific processing; and
return to the client device (102A) the user-specific output data as the data object.

9. The system of claim 8, wherein the indication to execute the data access control code indicates that the data access control code is to be executed as part of an authorization path and does not contain a reference to any specific input/output path.

10. The system of claim 8, wherein executing the data access control code comprises determining that the data request satisfies a temporal restriction placed on the requesting user's access to the data object or that that the requesting user is associated with a geographical region from which the requesting user is allowed to access the data object, and wherein the generated user-specific output data includes the data object in its entirety.

11. The system of claim 8, wherein executing the data access control code comprises determining that the requesting user has access to a first portion of the data object but does not have access to a second portion of the data object, and wherein the generated user-specific output data includes the first portion of the data object but not the second portion of the data object.

12. The system of claim 8, wherein the one or more data stores (166) further include an indication to execute a user code in connection with the input/output operations, the one or more processors further configured to:
determine one or more code execution environment rules associated with the data request;
execute the user code based at least on the one or more code execution environment rules;
obtain an execution result from the execution of the user code; and
return to the client device (102A), based at least on the execution result, the user-specific output data as the data object.

13. The system of claim 12, wherein executing the user code based at least on the one or more code execution environment rules comprises placing one or more restrictions defined by the one or more code execution environment rules on the execution of the user code.

14. The system of claim 12, wherein executing the user code based at least on the one or more code execution environment rules comprises allowing the execution of the user code to establish a network connection with an external service.

15. The system of claim 12, wherein executing the user code based at least on the one or more code execution environment rules comprises acquiring a virtual machine instance based at least on the one or more code execution environment rules, and executing the user code on the acquired virtual machine instance.

## Patentansprüche

1. Computerimplementiertes Verfahren, umfassend:
Speichern eines Datenobjekts und einer Angabe zur Ausführung eines eignerdefinierten Datenzugriffsteuerungscodes in Verbindung mit einer oder mehreren Eingabe-/Ausgabe-Operationen, die dem Datenobjekt zugeordnet sind;
Erhalten, von einem Client-Gerät (102A), einer Datenanforderung zum Abrufen des Datenobjekts, wobei die Datenanforderung das Datenobjekt und einen anfordernden Benutzer angibt, der der Datenanforderung zugeordnet ist;
Ausführen des Datenzugriffsteuerungscodes basierend auf mindestens einem oder beiden von Daten, die der Datenanforderung und den dem Datenobjekt zugeordneten Daten zugeordnet sind;
Ausführen, basierend zumindest auf einer Ausgabe der Ausführung des Datenzugriffsteuerungscodes, eines Datenmanipulationscodes gegen das Datenobjekt, wobei das Ausführen des Datenmanipulationscodes ein Anwenden einer benutzerspezifischen Modifikation, eines benutzerspezifischen Filterns oder eines benutzerspezifischen Verarbeitens umfasst, um eine benutzerspezifische Ausgabe zu erzeugen; und
Zurückführen, an das Client-Gerät (102A), der benutzerspezifischen Ausgabe der Ausführung des Datenmanipulationscodes als das Datenobjekt.

2. Computerimplementiertes Verfahren nach Anspruch 1, wobei das Ausführen des Datenmanipulationscodes ein Entfernen eines Teils des Datenobjekts und ein Erzeugen der benutzerspezifischen Ausgabe, die den entfernten Teil des Objekts nicht beinhaltet, umfasst.

3. Computerimplementiertes Verfahren nach Anspruch 1, wobei das Ausführen des Datenmanipulationscodes ein Erzeugen aggregierter Daten durch Aggregieren mindestens eines Teils des Datenobjekts und ein Erzeugen der benutzerspezifischen Ausgabe, die (i) die aggregierten Daten beinhaltet, die nicht in dem Datenobjekt enthalten sind, und (ii) mindestens einige in dem Datenobjekt enthaltene Daten nicht beinhaltet, umfasst.

4. Computerimplementiertes Verfahren nach Anspruch 1, wobei das Ausführen des Datenmanipulationscodes ein Unkenntlichmachen eines Teils des Datenobjekts und ein Erzeugen der benutzerspezifischen Ausgabe, die den unkenntlich gemachten Teil des Datenobjekts beinhaltet, umfasst.

5. Computerimplementiertes Verfahren nach Anspruch 1, wobei das Ausführen des Datenzugriffsteuerungscode ein Bestimmen umfasst, dass die Datenanforderung eine zeitliche Beschränkung nicht erfüllt, die mit dem Zugriff des anfordernden Benutzers auf das Datenobjekt verbunden ist, und wobei das Ausführen des Datenmanipulationscode ein Erzeugen der benutzerspezifischen Ausgabe umfasst, die sich von dem Datenobjekt unterscheidet, indem mindestens ein Teil des Datenobjekts entfernt, redigiert, gefiltert, aggregiert, verdeckt, verschlüsselt oder verarbeitet wird.

6. Computerimplementiertes Verfahren nach Anspruch 1, wobei das Ausführen des Datenzugriffsteuerungscode ein Bestimmen umfasst, dass die Datenanforderung eine geografische Beschränkung nicht erfüllt, die mit dem Zugriff des anfordernden Benutzers auf das Datenobjekt verbunden ist, und wobei das Ausführen des Datenmanipulationscode ein Erzeugen der benutzerspezifischen Ausgabe umfasst, die sich von dem Datenobjekt unterscheidet, indem mindestens ein Teil des Datenobjekts entfernt, redigiert, gefiltert, aggregiert, verdeckt, verschlüsselt oder verarbeitet wird.

7. Computerimplementiertes Verfahren nach Anspruch 1, wobei das Ausführen des Datenzugriffssteuerungscodes ein Bestimmen umfasst, dass der anfordernde Benutzer mehr als eine Schwellenanzahl von Malen auf das Datenobjekt zugegriffen hat, und wobei das Ausführen des Datenmanipulationscodes ein Erzeugen der benutzerspezifischen Ausgabe umfasst, die sich von dem Datenobjekt unterscheidet, indem mindestens ein Teil des Datenobjekts entfernt, redigiert, gefiltert, aggregiert, verdeckt, verschlüsselt oder verarbeitet wird.

8. System zum Bereitstellen einer angepassten Datenmanipulation eines in einem Objektspeicherdienst (160) gespeicherten Datenobjekts, wobei das System Folgendes umfasst:
einen oder mehrere Datenspeicher (166), umfassend:
das Datenobjekt; und
Informationen, die eine Modifikation der Eingabe/Ausgabe-Operationen bezeichnen, um die Ausführung eines eignerdefinierten Datenzugriffssteuerungscodes vor dem Bereitstellen von Antworten auf Anforderungen zum Durchführen der Eingabe-/Ausgabe-Operationen einzubeziehen;
einen oder mehrere Prozessoren, die mit computerausführbaren Anweisungen konfiguriert sind zum:
Erhalten, von einem Client-Gerät (102A), einer Datenanforderung zum Abrufen des Datenobjekts, wobei die Datenanforderung das Datenobjekt und einen anfordernden Benutzer angibt, der der Datenanforderung zugeordnet ist;
Ausführen des Datenzugriffssteuerungscodes basierend zumindest auf Metadaten, die einem oder beiden der Datenanforderung und dem Datenobjekt zugeordnet sind;
Erhalten, aus der Ausführung des Datenzugriffssteuerungscodes, einer Angabe, dass der anfordernde Benutzer auf das Datenobjekt zugreifen darf;
Erzeugen, basierend zumindest auf der Angabe, die aus der Ausführung des Datenzugriffssteuerungscodes erhalten wurde, von benutzerspezifischen Ausgabedaten, wobei das Erzeugen der benutzerspezifischen Ausgabedaten ein Anwenden einer benutzerspezifischen Modifikation, eines benutzerspezifischen Filterns oder eines benutzerspezifischen Verarbeitens umfasst; und
Zurückführen, an das Client-Gerät (102A), der benutzerspezifischen Ausgabedaten als das Datenobjekt.

9. System nach Anspruch 8, wobei die Angabe zum Ausführen des Datenzugriffssteuerungscodes angibt, dass der Datenzugriffssteuerungscode als Teil eines Autorisierungspfads auszuführen ist und keine Referenz auf einen bestimmten Eingabe-/Ausgabepfad enthält.

10. System nach Anspruch 8, wobei das Ausführen des Datenzugriffssteuerungscodes ein Bestimmen umfasst, dass die Datenanforderung eine zeitliche Beschränkung erfüllt, die mit dem Zugriff des anfordernden Benutzers auf das Datenobjekt verbunden ist, oder dass der anfordernde Benutzer einer geografischen Region zugeordnet ist, aus der der anfordernde Benutzer auf das Datenobjekt zugreifen darf, und wobei die erzeugten benutzerspezifischen Ausgabedaten das Datenobjekt in seiner Gesamtheit beinhalten.

11. System nach Anspruch 8, wobei das Ausführen des Datenzugriffssteuerungscodes ein Bestimmen umfasst, dass der anfordernde Benutzer Zugriff auf einen ersten Teil des Datenobjekts hat, jedoch keinen Zugriff auf einen zweiten Teil des Datenobjekts hat, und wobei die erzeugten benutzerspezifischen Ausgabedaten den ersten Teil des Datenobjekts, jedoch nicht den zweiten Teil des Datenobjekts beinhalten.

12. System nach Anspruch 8, wobei der eine oder die mehreren Datenspeicher (166) ferner eine Angabe zum Ausführen eines Benutzercodes in Verbindung mit den Eingabe-/Ausgabe-Operationen beinhalten, wobei der eine oder die mehreren Prozessoren ferner konfiguriert sind zum:
Bestimmen einer oder mehrerer Regeln für die Codeausführungsumgebung, die der Datenanforderung zugeordnet sind;
Ausführen des Benutzercodes basierend zumindest auf der einen oder den mehreren Regeln für die Codeausführungsumgebung;
Erhalten eines Ausführungsergebnisses aus der Ausführung des Benutzercodes; und
Zurückführen an das Client-Gerät (102A), basierend zumindest auf dem Ausführungsergebnis, der benutzerspezifischen Ausgabedaten als das Datenobjekt.

13. System nach Anspruch 12, wobei das Ausführen des Benutzercodes basierend zumindest auf der einen oder den mehreren Regeln für die Codeausführungsumgebung ein Auferlegen einer oder mehrerer Beschränkungen, die durch die eine oder die mehreren Regeln für die Codeausführungsumgebung definiert sind, für die Ausführung des Benutzercodes umfasst.

14. System nach Anspruch 12, wobei das Ausführen des Benutzercodes basierend zumindest auf der einen oder den Regeln für die Codeausführungsumgebung ein Zulassen der Ausführung des Benutzercodes zum Herstellen einer Netzwerkverbindung mit einem externen Dienst umfasst.

15. System nach Anspruch 12, wobei das Ausführen des Benutzercodes basierend zumindest auf der einen oder den mehreren Regeln für die Codeausführungsumgebung ein Erfassen einer virtuellen Maschineninstanz basierend auf zumindest der einen oder den mehreren Regeln für die Codeausführungsumgebung und ein Ausführen des Benutzercodes auf der erfassten virtuellen Maschineninstanz umfasst.

## Revendications

1. Procédé mis en œuvre par ordinateur, comprenant :
le stockage d'un objet de données et d'une indication pour exécuter un code de contrôle d'accès aux données défini par le propriétaire en rapport avec une ou plusieurs opérations d'entrée/sortie associées à l'objet de données ;
l'obtention à partir d'un dispositif client (102A) d'une demande de données pour récupérer l'objet de données, dans lequel la demande de données indique l'objet de données et un utilisateur demandeur associé à la demande de données ;
l'exécution du code de contrôle d'accès aux données sur la base d'au moins les unes ou les deux parmi des données associées à la demande de données et des données associées à l'objet de données ;
l'exécution, sur la base au moins d'une sortie de l'exécution du code de contrôle d'accès aux données, d'un code de manipulation de données par rapport à l'objet de données, dans lequel l'exécution du code de manipulation de données comprend l'application d'une modification spécifique à l'utilisateur, d'un filtrage spécifique à l'utilisateur, ou d'un traitement spécifique à l'utilisateur pour produire une sortie spécifique à l'utilisateur ; et
le renvoi au dispositif client (102A) de la sortie spécifique à l'utilisateur de l'exécution du code de manipulation de données en tant qu'objet de données.

2. Procédé mis en œuvre par ordinateur selon la revendication 1, dans lequel l'exécution du code de manipulation de données comprend la suppression d'une partie de l'objet de données, et la génération de la sortie spécifique à l'utilisateur qui n'inclut pas la partie supprimée de l'objet.

3. Procédé mis en œuvre par ordinateur selon la revendication 1, dans lequel l'exécution du code de manipulation de données comprend la génération de données agrégées par agrégation d'au moins une partie de l'objet de données, et la génération de la sortie spécifique à l'utilisateur qui (i) inclut les données agrégées qui ne sont pas incluses dans l'objet de données et (ii) n'inclut pas au moins certaines données incluses dans l'objet de données.

4. Procédé mis en œuvre par ordinateur selon la revendication 1, dans lequel l'exécution du code de manipulation de données comprend le fait de rendre inintelligible une partie de l'objet de données ; et la génération de la sortie spécifique à l'utilisateur qui inclut la partie de l'objet de données rendue inintelligible.

5. Procédé mis en œuvre par ordinateur selon la revendication 1, dans lequel l'exécution du code de contrôle d'accès aux données comprend la détermination du fait que la demande de données ne satisfait pas une restriction temporelle placée sur l'accès de l'utilisateur demandeur à l'objet de données, et dans lequel l'exécution du code de manipulation de données comprend la génération de la sortie spécifique à l'utilisateur qui est différente de l'objet de données par suppression, caviardage, filtrage, agrégation, brouillage, chiffrement, ou traitement d'au moins une partie de l'objet de données.

6. Procédé mis en œuvre par ordinateur selon la revendication 1, dans lequel l'exécution du code de contrôle d'accès aux données comprend la détermination du fait que la demande de données ne satisfait pas une restriction géographique placée sur l'accès de l'utilisateur demandeur à l'objet de données, et dans lequel l'exécution du code de manipulation de données comprend la génération de la sortie spécifique à l'utilisateur qui est différente de l'objet de données par suppression, caviardage, filtrage, agrégation, brouillage, chiffrement, ou traitement d'au moins une partie de l'objet de données.

7. Procédé mis en œuvre par ordinateur selon la revendication 1, dans lequel l'exécution du code de contrôle d'accès aux données comprend la détermination du fait que l'utilisateur demandeur a accédé à l'objet de données plus d'un nombre de fois seuil, et dans lequel l'exécution du code de manipulation de données comprend la génération de la sortie spécifique à l'utilisateur qui est différente de l'objet de données par suppression, caviardage, filtrage, agrégation, brouillage, chiffrement, ou traitement d'au moins une partie de l'objet de données.

8. Système de fourniture d'une manipulation de données personnalisée d'un objet de données stocké sur un service de stockage d'objet (160), le système comprenant :
un ou plusieurs magasins de données (166) incluant :
l'objet de données ; et
des informations désignant une modification d'opérations d'entrée/sortie pour inclure l'exécution d'un code de contrôle d'accès aux données défini par le propriétaire avant la fourniture de réponses à des demandes de réalisation des opérations d'entrée/sortie ;
un ou plusieurs processeurs configurés avec des instructions exécutables par ordinateur pour :
obtenir à partir d'un dispositif client (102A) une demande de données pour récupérer l'objet de données, dans lequel la demande de données indique l'objet de données et un utilisateur demandeur associé à la demande de données ;
exécuter le code de contrôle d'accès aux données sur la base au moins de métadonnées associées à l'un ou aux deux par la demande de données et/ou à l'objet de données ;
obtenir, à partir de l'exécution du code de contrôle d'accès aux données, une indication selon laquelle l'utilisateur demandeur est autorisé à accéder à l'objet de données ;
générer, sur la base au moins de l'indication obtenue à partir de l'exécution du code de contrôle d'accès aux données, des données de sortie spécifiques à l'utilisateur, dans lequel la génération des données de sortie spécifiques à l'utilisateur comprend l'application d'une modification spécifique à l'utilisateur, d'un filtrage spécifique à l'utilisateur, ou d'un traitement spécifique à l'utilisateur ; et
renvoyer au dispositif client (102A) les données de sortie spécifiques à l'utilisateur en tant qu'objet de données.

9. Système selon la revendication 8, dans lequel l'indication pour exécuter le code de contrôle d'accès aux données indique que le code de contrôle d'accès aux données doit être exécuté en tant que partie d'un chemin d'autorisation et ne contient pas de référence à un quelconque chemin d'entrée/sortie spécifique.

10. Système selon la revendication 8, dans lequel l'exécution du code de contrôle d'accès aux données comprend la détermination du fait que la demande de données satisfait une restriction temporelle placée sur l'accès de l'utilisateur demandeur à l'objet de données ou que l'utilisateur demandeur est associé à une région géographique à partir de laquelle l'utilisateur demandeur est autorisé à accéder à l'objet de données, et dans lequel les données de sortie spécifiques à l'utilisateur générées incluent l'objet de données dans son intégralité.

11. Système selon la revendication 8, dans lequel l'exécution du code de contrôle d'accès aux données comprend la détermination du fait que l'utilisateur demandeur a accès à une première partie de l'objet de données, mais n'a pas accès à une deuxième partie de l'objet de données, et dans lequel les données de sortie spécifiques à l'utilisateur générées incluent la première partie de l'objet de données, mais pas la deuxième partie de l'objet de données.

12. Système selon la revendication 8, dans lequel les un ou plusieurs magasins de données (166) incluent en outre une indication pour exécuter un code d'utilisateur en rapport avec les opérations d'entrée/sortie, les un ou plusieurs processeurs étant en outre configurés pour :
déterminer une ou plusieurs règles d'environnement d'exécution de code associées à la demande de données ;
exécuter le code utilisateur sur la base au moins des une ou plusieurs règles d'environnement d'exécution de code ;
obtenir un résultat d'exécution à partir de l'exécution du code d'utilisateur ; et
renvoyer au dispositif client (102A), sur la base au moins du résultat d'exécution, les données de sortie spécifiques à l'utilisateur en tant qu'objet de données.

13. Système selon la revendication 12, dans lequel l'exécution du code d'utilisateur sur la base au moins des une ou plusieurs règles d'environnement d'exécution de code comprend le placement d'une ou de plusieurs restrictions définies par les une ou plusieurs règles d'environnement d'exécution de code sur l'exécution du code d'utilisateur.

14. Système selon la revendication 12, dans lequel l'exécution du code d'utilisateur sur la base au moins des une ou plusieurs règles d'environnement d'exécution de code comprend le fait d'autoriser l'exécution du code d'utilisateur pour établir une connexion de réseau avec un service externe.

15. Système selon la revendication 12, dans lequel l'exécution du code d'utilisateur sur la base au moins des une ou plusieurs règles d'environnement d'exécution de code comprend l'acquisition d'une instance de machine virtuelle sur la base au moins des une ou plusieurs règles d'environnement d'exécution de code, et l'exécution du code d'utilisateur sur l'instance de machine virtuelle acquise.
